# EUROPEAN PATENT APPLICATION

(11) **EP 4 243 508 A1**
(43) Date of publication of application: **13.09.2023**
(21) Application number: 20965365.8
(22) Date of filing: 14.12.2020
(51) Int. Cl.: H04W 52/02

(54) **COMMUNICATION METHOD, APPARATUS AND SYSTEM**

(71) Applicant: Huawei Technologies Co., Ltd., Shenzhen, Guangdong 518129 (CN)
(72) Inventor: YANG, Shuigen, Shenzhen, Guangdong 518129 (CN); JIN, Yinghao, Shenzhen, Guangdong 518129 (CN); ZHOU, Yu, Shenzhen, Guangdong 518129 (CN)
(74) Representative: Epping - Hermann - Fischer
(86) International application number: PCT/CN2020/136268
(87) International publication number: WO 2022/126347

(57) **Abstract**

Embodiments of this application provide a communication method, apparatus, and system, and relate to the field of communication technologies, to resolve a technical problem that overall energy consumption of a communication system cannot be reduced because quality of service of a terminal device is poor due to a service characteristic or improper load determining of an access network device. The method includes: A first access network device obtains first energy efficiency, and performs an energy saving operation based on the first energy efficiency, where the first energy efficiency is determined based on performance and energy consumption that correspond to a first object in a second access network device.

## Description

### TECHNICAL FIELD

Embodiments of this application relate to the field of communication technologies, and in particular, to a communication method, apparatus, and system.

### BACKGROUND

In an existing communication system, adjacent access network devices may exchange load statuses of respective communication cells, and perform load balancing based on the load statuses of the communication cells, so that the load statuses of the communication cells in the communication system are approximately consistent, to reduce energy consumption of each access network device in the communication system.

For example, when there is no communication service in a current communication cell or load corresponding to a communication service is low, an access network device may disable a part or all of transmitting channels of the communication cell. Alternatively, when a quantity of terminal devices in a communication cell is small, an access network device may hand over a terminal device in the communication cell to a target communication cell accessible in terms of load, and disable the communication cell, to reduce energy consumption of the access network device. However, when the access network device performs an energy saving operation based on the communication service or the load corresponding to the communication cell, improper load determining may cause poor quality of service of the terminal device, and overall energy consumption of the communication system cannot be reduced.

### SUMMARY

In view of this, this application provides a communication method, apparatus, and system, to resolve a technical problem that overall energy consumption of a communication system cannot be reduced because quality of service of a terminal device is poor due to a service characteristic or improper load determining of an access network device. According to a first aspect, an embodiment of this application provides a communication method. The method includes: A first access network device performs an energy saving operation based on obtained first energy efficiency, where the first energy efficiency is determined based on performance and energy consumption that correspond to a first object in a second access network device.

Based on the first aspect, the first access network device may perform the energy saving operation based on to the first energy efficiency corresponding to the second access network device. Because the first energy efficiency is determined based on the performance and the energy consumption that correspond to the first object in the second access network device, the first access network device may select, effectively with reference to the performance and the energy consumption that correspond to the first object in the second access network device, an appropriate energy saving operation to perform energy saving, so that a problem that overall energy consumption of a communication system cannot be reduced because quality of service of a terminal device is poor due to a service characteristic or improper load determining of an access network device is avoided, and the overall energy consumption of the communication system is effectively reduced.

In a possible design, the first object includes one or more of the following: a network slice, a service, or an area.

Based on this possible design, when the first object is the network slice, the first energy efficiency may be energy efficiency of the network slice; when the first object is the service, the first energy efficiency may be energy efficiency of the service; or when the first object is the area, the first energy efficiency may be energy efficiency of the area. The first access network device may perform the energy saving operation in a plurality of dimensions based on the first energy efficiency corresponding to the different first objects, so that the overall energy consumption of the communication system can be effectively reduced.

In a possible design, the performance includes one or more of the following: a data volume, a latency, or a quantity of terminal devices.

Based on this possible design, the performance may include one or more of the data volume, the latency, or the quantity of terminal devices, and may further include another parameter that can indicate the performance. This is not limited. In a possible design, the first energy efficiency further includes first time that indicates time corresponding to the first energy efficiency and/or second time that indicates time at which the second access network device generates the first energy efficiency.

Based on this possible design, the first access network may determine, based on the first time, the time corresponding to the first energy efficiency, determine, based on the second time, the time at which the second access network device generates the first energy efficiency, and determine, based on the first time and the second time, whether to perform the energy saving operation based on the first energy efficiency, so that effectiveness of the first energy efficiency is improved, and the overall energy consumption of the communication system is reduced.

In a possible design, a type of the first energy efficiency includes energy efficiency statistics information and/or target energy efficiency information.

Based on this possible design, when the first energy efficiency is the energy efficiency statistics information, the first access network device may determine, based on the first energy efficiency, energy efficiency that has occurred. The first access network device may further predict energy efficiency in a future time period based on the energy efficiency that has occurred, and perform the energy saving operation based on the energy efficiency in the future time period, to effectively reduce the overall energy consumption of the communication system. When the first energy efficiency is the target energy efficiency information, the first access network device may be prevented from predicting energy efficiency in a future time period based on energy efficiency that has occurred, so that energy consumption of the first access network device is reduced.

In a possible design, before the first access network device obtains the first energy efficiency, the first access network device further sends first request information that is for requesting the first energy efficiency corresponding to the second access network device.

Based on this possible design, the first access network device may send the first request information, so that the second access network device sends the first energy efficiency to the first access network device. This provides a feasible solution for the first access network device to obtain the first energy efficiency.

In a possible design, the first request information includes one or more of the following: identifier information of the first object, the type of the first energy efficiency, information about the first time, obtaining time corresponding to the first energy efficiency, periodic indication information corresponding to the first energy efficiency, or expected accuracy corresponding to the first energy efficiency. The type of the first energy efficiency includes the energy efficiency statistics information and/or the target energy efficiency information. The obtaining time corresponding to the first energy efficiency indicates time at which the first access network device expects to obtain the first energy efficiency. The periodic indication information corresponding to the first energy efficiency indicates the second access network device whether to periodically send the first energy efficiency to the first access network device.

Based on this possible design, the first access network device carries one or more of the foregoing parameters in the first request information, so that the second access network device can generate, based on the first request information, the first energy efficiency that satisfies a requirement of the first access network device, to improve the effectiveness of the first energy efficiency, and help the first access network device to effectively reduce the overall energy consumption of the communication system based on the obtained first energy efficiency.

In a possible design, the first access network device hands over a part or all of terminal devices corresponding to the first object to the second access network device.

Based on this possible design, the first access network device hands over a part or all of the terminal devices of the first object to the second access network device, so that no resource needs to be allocated to the terminal device handed over to the second access network device. Therefore, a power amplifier, a power amplifier of a cell radio frequency channel, or a power amplifier of a cell carrier in a symbol periodicity related to the terminal device handed over to the second access network device is turned off, so that the energy consumption of the first access network device is reduced, and the overall energy consumption of the communication system is further reduced.

In a possible design, the first access network device performs the energy saving operation based on obtained communication information of a terminal device and the first energy efficiency. The communication information indicates a communication feature of communication that is performed by the terminal device and that corresponds to the first object.

Based on this possible design, the first access network device performs the energy saving operation based on the obtained communication information of the terminal device and the first energy efficiency, so that the overall energy consumption of the communication system can be effectively reduced on a basis that performance of the terminal device is ensured.

In a possible design, the communication information includes one or more of the following: a communication time period, a data volume, a periodic communication indication, or a burst communication indication. The communication time period indicates a time period in which the communication corresponding to the communication information occurs. The data volume indicates an uplink data volume and/or a downlink data volume during the communication performed by the terminal device. The periodic communication indication indicates whether the communication corresponding to the communication information is periodic. The burst communication indication indicates whether the communication corresponding to the communication information is bursty. If the communication is bursty, the burst communication indication further indicates at least one of time of the burst communication, an uplink data volume of the burst communication, or a downlink data volume of the burst communication.

Based on this possible design, the first access network device may determine, based on the parameter included in the communication information, the communication feature of the communication performed by the terminal device, and then perform the energy saving operation based on the communication feature and the first energy efficiency, so that the overall energy consumption of the communication system can be effectively reduced on the basis that the performance of the terminal device is ensured.

In a possible design, the communication information further includes third time that indicates time corresponding to the communication information and/or fourth time that indicates time at which the terminal device generates the communication information.

Based on this possible design, the first access network may determine, based on the third time, the time corresponding to the communication information, determine, based on the fourth time, the time at which the terminal device generates the communication information, and determine, based on the third time and the fourth time, whether to perform the energy saving operation based on the communication information, so that effectiveness of the communication information is improved, and the overall energy consumption of the communication system is reduced.

In a possible design, a type of the communication information includes communication statistics information and/or target communication information.

Based on this possible design, when the communication information is the communication statistics information, the first access network device may determine, based on the communication information, communication that has occurred. The first access network device may further predict communication in a future time period based on the communication that has occurred, and perform the energy saving operation based on the communication in the future time period, to effectively reduce the overall energy consumption of the communication system. When the communication information is the target communication information, the first access network device may be prevented from predicting communication in a future time period based on communication that has occurred, so that the energy consumption of the first access network device is reduced.

In a possible design, before the first access network device obtains the communication information of the terminal device, the first access network device further sends second request information that is for requesting the communication information corresponding to the terminal device.

Based on this possible design, the first access network device may send the second request information, so that the terminal device sends the communication information to the first access network device. This provides a feasible solution for the first access network device to obtain the communication information.

In a possible design, the second request information includes one or more of the following: the identifier information of the first object, the type of the communication information, information about the third time, obtaining time corresponding to the communication information, periodic indication information corresponding to the communication information, or expected accuracy corresponding to the communication information. The type of the communication information includes the communication statistics information and/or the target communication information. The obtaining time corresponding to the communication information indicates time at which the first access network device expects to obtain the communication information. The periodic indication information corresponding to the communication information indicates the terminal device whether to periodically send the communication information to the first access network device.

Based on this possible design, the first access network device carries one or more of the foregoing parameters in the second request information, so that the terminal device can generate, based on the second request information, the communication information that satisfies a requirement of the first access network device, to improve the effectiveness of the communication information, and help the first access network device to effectively reduce the overall energy consumption of the communication system based on the obtained communication information.

In a possible design, after the first access network device hands over the terminal device to the second access network device, the first access network device further receives a communication measurement result of the terminal device from the second access network device. The communication measurement result indicates a communication feature that corresponds to the terminal device after the terminal device accesses the second access network device.

Based on this possible design, after the terminal device is handed over to the second access network device, the first access network device may determine, based on the obtained communication measurement result of the terminal device, the communication feature of the terminal device after the terminal device is handed over to the second access network device. Further, the first access network device may further adjust the energy saving operation based on a communication feature of the terminal device before the handover and the communication feature of the terminal device after the handover, to effectively reduce the overall energy consumption of the communication system.

In a possible design, before the first access network device receives the communication measurement result of the terminal device from the second access network device, the first access network device further sends, to the second access network device, third request information that is for requesting the communication measurement result of the terminal device.

Based on this possible design, the first access network device may send the third request information, so that the terminal device sends the communication measurement result to the first access network device via the second access network device. This provides a feasible solution for the first access network device to obtain the communication measurement result.

In a possible design, the first access network device performs the energy saving operation based on obtained movement track information of the terminal device and the first energy efficiency.

Based on this possible design, the first access network device performs the energy saving operation based on the obtained movement track information of the terminal device and the first energy efficiency, so that the overall energy consumption of the communication system can be effectively reduced on the basis that the performance of the terminal device is ensured.

In a possible design, the movement track information includes one or more of the following: a location, a direction, a speed, or an acceleration.

Based on this possible design, the movement track information may include one or more of the foregoing parameters, and may further include another parameter that indicates a movement track of the terminal device. This is not limited. In a possible design, the movement track information further includes fifth time that indicates time corresponding to the movement track information and/or sixth time that indicates time at which the terminal device generates the movement track information.

Based on this possible design, the first access network may determine, based on the fifth time, the time corresponding to the movement track information, determine, based on the sixth time, the time at which the terminal device generates the movement track information, and determine, based on the fifth time and the sixth time, whether to perform the energy saving operation based on the movement track information, so that effectiveness of the movement track information is improved, and the overall energy consumption of the communication system is reduced.

In a possible design, a type of the movement track information includes movement track statistics information and/or target movement track information.

Based on this possible design, when the movement track information is the movement track statistics information, the first access network device may determine, based on the movement track information, a movement track that has occurred on the terminal device. The first access network device may further predict a movement track of the terminal device in a future time period based on the movement track that has occurred on the terminal device, and perform the energy saving operation based on the movement track of the terminal device in the future time period, to effectively reduce the overall energy consumption of the communication system. When the movement track information is the target movement track information, the first access network device may be prevented from predicting a movement track of the terminal device in a future time period based on a movement track that has occurred, so that the energy consumption of the first access network device is reduced.

In a possible design, before the first access network device obtains the movement track information of the terminal device, the first access network device further sends fourth request information that is for requesting the movement track information corresponding to the terminal device.

Based on this possible design, the first access network device may send the fourth request information, so that the terminal device sends the movement track information to the first access network device. This provides a feasible solution for the first access network device to obtain the movement track information.

In a possible design, the fourth request information includes one or more of the following: the location, the direction, the speed, the acceleration, the type of the movement track information, information about the fifth time, obtaining time corresponding to the movement track information, periodic indication information corresponding to the movement track information, or expected accuracy corresponding to the movement track information. The type of the movement track information includes the movement track statistics information and/or the target movement track information. The obtaining time corresponding to the movement track information indicates time at which the first access network device expects to obtain the movement track information. The periodic indication information corresponding to the movement track information indicates the terminal device whether to periodically send the movement track information to the first access network device.

Based on this possible design, the first access network device carries one or more of the foregoing parameters in the fourth request information, so that the terminal device can generate, based on the fourth request information, the movement track information that satisfies a requirement of the first access network device, to improve the effectiveness of the movement track information, and help the first access network device to effectively reduce the overall energy consumption of the communication system based on the obtained movement track information. According to a second aspect, an embodiment of this application provides a first access network device. The first access network device may implement a function performed by the first access network device in the first aspect or the possible designs of the first aspect. The function may be implemented by hardware executing corresponding software. The hardware or the software includes one or more modules corresponding to the function, for example, a transceiver module and a processing module. The transceiver module is configured to obtain first energy efficiency. The processing module is configured to perform an energy saving operation based on the first energy efficiency. The first energy efficiency is determined based on performance and energy consumption that correspond to a first object in a second access network device.

It should be noted that, for a specific implementation of the first access network device in the second aspect, refer to a behavior function of the first access network device in the communication method provided in any one of the first aspect or the possible designs of the first aspect. Details are not described again.

According to a third aspect, an embodiment of this application provides a first access network device. The first access network device may be a first access network device, or a chip or a system-on-a-chip in the first access network device. The first access network device may implement a function performed by the first access network device in the foregoing aspects or the possible designs. The function may be implemented by hardware. In a possible design, the first access network device may include a transceiver and a processor. The transceiver and the processor may be configured to support the first access network device in implementing the function in any one of the first aspect or the possible designs of the first aspect. For example, the transceiver may be configured to obtain first energy efficiency. The processor may be configured to perform an energy saving operation based on the first energy efficiency. The first energy efficiency is determined based on performance and energy consumption that correspond to a first object in a second access network device. In another possible design, the first access network device may further include a memory. The memory is configured to store computer-executable instructions and data that are necessary for the first access network device. When the first access network device runs, the transceiver and the processor execute the computer-executable instructions stored in the memory, to enable the first access network device to perform the communication method in any one of the first aspect or the possible designs of the first aspect.

For a specific implementation of the first access network device in the third aspect, refer to a behavior function of the first access network device in the communication method provided in any one of the first aspect or the possible designs of the first aspect.

According to a fourth aspect, an embodiment of this application provides a communication method. The method may include: A second access network device determines first energy efficiency, and sends the first energy efficiency to a first access network device. The first energy efficiency is determined based on performance and energy consumption that correspond to a first object in the second access network device.

Based on the fourth aspect, the second access network device sends the first energy efficiency to the first access network device, so that the first access network device can perform an energy saving operation based on the first energy efficiency, to reduce overall energy consumption of a communication system.

In a possible design, before the second access network device sends the first energy efficiency to the first access network device, the second access network device further receives, from the first access network device, first request information that is for requesting the first energy efficiency corresponding to the second access network device.

Based on this possible design, the second access network device may send the first energy efficiency to the first access network device based on the first request information, so that a feasible method for the second access network device to send the first energy efficiency to the first access network device is provided.

In a possible design, the second access network device sends, to the first access network device, a communication measurement result sent by a terminal device, where the communication measurement result indicates a communication feature that corresponds to the terminal device after the terminal device accesses the second access network device.

Based on this possible design, after the terminal device is handed over to the second access network device, the second access network device sends the communication measurement result of the terminal device to the first access network device, so that the first access network device can determine, based on the obtained communication measurement result of the terminal device, the communication feature of the terminal device after the terminal device is handed over to the second access network device. Further, the first access network device may further adjust the energy saving operation based on a communication feature of the terminal device before the handover and the communication feature of the terminal device after the handover, to effectively reduce the overall energy consumption of the communication system.

In a possible design, before the second access network device receives the communication measurement result from the terminal device, the second access network device receives, from the first access network device, third request information that is for requesting the communication measurement result of the terminal device; and sends the third request information to the terminal device.

Based on this possible design, the second access network device sends, to the terminal device, the third request information sent by the first access network device, so that the terminal device can send the communication measurement result to the second access network device based on the third request information. This provides a feasible method for the second access network device to send the communication measurement result to the first access network device.

According to a fifth aspect, an embodiment of this application provides a second access network device. The second access network device may implement a function performed by the second access network device in the fourth aspect or the possible designs of the fourth aspect. The function may be implemented by hardware executing corresponding software. The hardware or the software includes one or more modules corresponding to the function, for example, a processing module and a transceiver module. The processing module is configured to determine first energy efficiency.

The transceiver module is configured to send the first energy efficiency to a first access network device. The first energy efficiency is determined based on performance and energy consumption that correspond to a first object in the second access network device.

It should be noted that, for a specific implementation of the second access network device in the fifth aspect, refer to a behavior function of the second access network device in the communication method provided in any one of the fourth aspect or the possible designs of the fourth aspect. Details are not described again.

According to a sixth aspect, an embodiment of this application provides a second access network device. The second access network device may be a second access network device, or a chip or a system-on-a-chip in the second access network device. The second access network device may implement a function performed by the second access network device in the foregoing aspects or the possible designs. The function may be implemented by hardware. In a possible design, the second access network device may include a processor and a transceiver. The processor and the transceiver may be configured to support the second access network device in implementing the function in any one of the fourth aspect or the possible designs of the fourth aspect. For example, the processor may be configured to determine first energy efficiency. The transceiver may be configured to send the first energy efficiency to a first access network device. The first energy efficiency is determined based on performance and energy consumption that correspond to a first object in the second access network device. In another possible design, the second access network device may further include a memory. The memory is configured to store computer-executable instructions and data that are necessary for the second access network device. When the second access network device runs, the transceiver and the processor execute the computer-executable instructions stored in the memory, to enable the second access network device to perform the communication method in any one of the fourth aspect or the possible designs of the fourth aspect.

For a specific implementation of the second access network device in the sixth aspect, refer to a behavior function of the second access network device in the communication method provided in any one of the fourth aspect or the possible designs of the fourth aspect.

According to a seventh aspect, an embodiment of this application provides a communication method. The method includes: A terminal device determines communication information that indicates a communication feature of communication that is performed by the terminal device and that corresponds to a first object; and sends the communication information to a first access network device. The communication information is used by the first access network device to perform an energy saving operation based on the communication information and first energy efficiency, and the first energy efficiency is determined based on performance and energy consumption that correspond to the first object in a second access network device.

Based on the seventh aspect, the terminal device sends the communication information to the first access network device, so that the first access network device can perform the energy saving operation based on the communication information and the first energy efficiency. Therefore, overall energy consumption of a communication system is effectively reduced on a basis that performance of the terminal device is ensured.

In a possible design, before the terminal device sends the communication information to the first access network device, the terminal device further receives, from the first access network device, second request information that is for requesting the communication information corresponding to the terminal device.

Based on this possible design, the terminal device may send the communication information to the first access network device based on the second request information. This provides a feasible solution for the terminal device to send the communication information to the first access network device.

In a possible design, after the terminal device is handed over to the second access network device, the terminal device sends, to the second access network device, a communication measurement result that indicates a communication feature that corresponds to the terminal device after the terminal device accesses the second access network device. Based on this possible design, after the terminal device is handed over to the second access network device, the terminal device may send the communication measurement result of the terminal device to the first access network device via the second access network device, so that the first access network device determines, based on the obtained communication measurement result of the terminal device, the communication feature of the terminal device after the terminal device is handed over to the second access network device. Further, the first access network device may further adjust the energy saving operation based on a communication feature of the terminal device before the handover and the communication feature of the terminal device after the handover, to effectively reduce the overall energy consumption of the communication system.

In a possible design, before the terminal device sends the communication measurement result to the second access network device, the terminal device receives, from the second access network device, third request information that is for requesting the communication measurement result of the terminal device.

Based on this possible design, the terminal device may send the communication measurement result to the first access network device via the second access network device based on the third request information. This provides a feasible solution for the terminal device to send the communication measurement result to the first access network device via the second access network device.

According to an eighth aspect, an embodiment of this application provides a communication method. The method may include: A terminal device determines movement track information, and sends the movement track information to a first access network device. The movement track information is used by the first access network device to perform an energy saving operation based on the movement track information and first energy efficiency, and the first energy efficiency is determined based on performance and energy consumption that correspond to a first object in a second access network device.

Based on the eighth aspect, the terminal device sends the movement track information to the first access network device, so that the first access network device can perform the energy saving operation based on the movement track information and the first energy efficiency. Therefore, overall energy consumption of a communication system is effectively reduced on a basis that performance of the terminal device is ensured.

In a possible design, before the terminal device sends the movement track information to the first access network device, the terminal device receives, from the first access network device, fourth request information that is for requesting the movement track information corresponding to the terminal device.

Based on this possible design, the terminal device may send the movement track information to the first access network device based on the fourth request information. This provides a feasible solution for the terminal device to send the movement track information to the first access network device.

According to a ninth aspect, an embodiment of this application provides a terminal device. The terminal device may implement a function performed by the terminal device in the seventh aspect or the possible designs of the seventh aspect, or implement a function performed by the terminal device in the eighth aspect or the possible designs of the eighth aspect. The function may be implemented by hardware executing corresponding software. The hardware or the software includes one or more modules corresponding to the function, for example, a processing module and a transceiver module. The processing module is configured to determine communication information that indicates a communication feature of communication that is performed by the terminal device and that corresponds to a first object. The transceiver module is configured to send the communication information to a first access network device. The communication information is used by the first access network device to perform an energy saving operation based on the communication information and first energy efficiency, and the first energy efficiency is determined based on performance and energy consumption that correspond to the first object in a second access network device. Alternatively, the processing module is configured to determine movement track information. The transceiver module is configured to send the movement track information to a first access network device. The movement track information is used by the first access network device to perform an energy saving operation based on the movement track information and first energy efficiency, and the first energy efficiency is determined based on performance and energy consumption that correspond to a first object in a second access network device.

It should be noted that, for a specific implementation of the terminal device in the ninth aspect, refer to a behavior function of the terminal device in the communication method provided in any one of the seventh aspect or the possible designs of the seventh aspect, or refer to a behavior function of the terminal device in the communication method provided in any one of the eighth aspect or the possible designs of the eighth aspect. Details are not described again. According to a tenth aspect, an embodiment of this application provides a terminal device. The terminal device may be a terminal device, or a chip or a system-on-a-chip in the terminal device. The terminal device may implement a function performed by the terminal device in the foregoing aspects or the possible designs. The function may be implemented by hardware. In a possible design, the terminal device may include a processor and a transceiver. The processor and the transceiver may be configured to support the terminal device in implementing the function in any one of the seventh aspect or the possible designs of the seventh aspect, or implementing the function in any one of the eighth aspect or the possible designs of the eighth aspect. For example, the processor may be configured to determine communication information that indicates a communication feature of communication that is performed by the terminal device and that corresponds to a first object. The transceiver may be configured to send the communication information to a first access network device. The communication information is used by the first access network device to perform an energy saving operation based on the communication information and first energy efficiency, and the first energy efficiency is determined based on performance and energy consumption that correspond to the first object in a second access network device. Alternatively, the processor may be configured to determine movement track information. The transceiver may be configured to send the movement track information to a first access network device. The movement track information is used by the first access network device to perform an energy saving operation based on the movement track information and first energy efficiency, and the first energy efficiency is determined based on performance and energy consumption that correspond to a first object in a second access network device. In another possible design, the terminal device may further include a memory. The memory is configured to store computer-executable instructions and data that are necessary for the terminal device. When the terminal device runs, the transceiver and the processor execute the computer-executable instructions stored in the memory, to enable the terminal device to perform the communication method in any one of the seventh aspect or the possible designs of the seventh aspect, or perform the communication method in any one of the eighth aspect or the possible designs of the eighth aspect.

For a specific implementation of the terminal device in the tenth aspect, refer to a behavior function of the terminal device in the communication method provided in any one of the seventh aspect or the possible designs of the seventh aspect, or refer to a behavior function of the terminal device in the communication method provided in any one of the eighth aspect or the possible designs of the eighth aspect.

According to an eleventh aspect, a communication apparatus is provided, where the communication apparatus includes one or more processors, and the one or more processors are configured to run a computer program or instructions. When the one or more processors execute the computer instructions or the instructions, the communication apparatus is enabled to perform the communication method in any one of the first aspect or the possible designs of the first aspect, perform the communication method in any one of the fourth aspect or the possible designs of the fourth aspect, perform the communication method in any one of the seventh aspect or the possible designs of the seventh aspect, or perform the communication method in any one of the eighth aspect or the possible designs of the eighth aspect.

In a possible design, the communication apparatus further includes one or more memories. The one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive a signal and/or send information.

In a possible design, the communication apparatus further includes one or more communication interfaces. The one or more communication interfaces are coupled to the one or more processors, and the one or more communication interfaces are configured to communicate with another module other than the communication apparatus.

According to a twelfth aspect, the communication apparatus includes an interface circuit and a logic circuit. The interface circuit is configured to obtain input information and/or output information. The logic circuit is configured to perform the communication method in any one of the first aspect or the possible designs of the first aspect, perform the communication method in any one of the fourth aspect or the possible designs of the fourth aspect, perform the communication method in any one of the seventh aspect or the possible designs of the seventh aspect, or perform the communication method in any one of the eighth aspect or the possible designs of the eighth aspect, and perform processing based on the input information and/or generate the output information.

According to a thirteenth aspect, a computer-readable storage medium is provided, where the computer-readable storage medium stores computer instructions or a program. When the computer instructions or the program is run on a computer, the computer is enabled to perform the communication method in any one of the first aspect or the possible designs of the first aspect, perform the communication method in any one of the fourth aspect or the possible designs of the fourth aspect, perform the communication method in any one of the seventh aspect or the possible designs of the seventh aspect, or perform the communication method in any one of the eighth aspect or the possible designs of the eighth aspect.

According to a fourteenth aspect, a computer program product including computer instructions is provided. When the computer instructions are run on a computer, the computer is enabled to perform the communication method in any one of the first aspect or the possible designs of the first aspect, perform the communication method in any one of the fourth aspect or the possible designs of the fourth aspect, perform the communication method in any one of the seventh aspect or the possible designs of the seventh aspect, or perform the communication method in any one of the eighth aspect or the possible designs of the eighth aspect.

According to a fifteenth aspect, an embodiment of this application provides a computer program. When the computer program is run on a computer, the computer is enabled to perform the communication method in any one of the first aspect or the possible designs of the first aspect, perform the communication method in any one of the fourth aspect or the possible designs of the fourth aspect, perform the communication method in any one of the seventh aspect or the possible designs of the seventh aspect, or perform the communication method in any one of the eighth aspect or the possible designs of the eighth aspect.

For technical effects brought by any design of the eleventh aspect to the fifteenth aspect, refer to technical effects brought by any possible design of the first aspect, refer to technical effects brought by any possible design of the fourth aspect, refer to technical effects brought by any possible design of the seventh aspect, or refer to technical effects brought by any possible design of the eighth aspect. Details are not described again.

According to a sixteenth aspect, a communication system is provided. The communication system includes the first access network device in either of the second aspect and the third aspect, the second access network device in either of the fifth aspect and the sixth aspect, and the terminal device in either of the ninth aspect and the tenth aspect.

### BRIEF DESCRIPTION OF DRAWINGS

FIG. 1a is a schematic diagram of a communication system according to an embodiment of this application;
FIG. 1b is a schematic diagram of an architecture of a separated access network device according to an embodiment of this application;
FIG. 2 is a schematic diagram of composition of a communication apparatus according to an embodiment of this application;
FIG. 3 is a flowchart of a communication method according to an embodiment of this application;
FIG. 4 is a schematic diagram of a new protocol stack between access network devices according to an embodiment of this application;
FIG. 5 is a schematic diagram of a new protocol stack between a DU and a CU/CU-CP according to an embodiment of this application;
FIG. 6 is a flowchart of a communication method according to an embodiment of this application;
FIG. 7a is a flowchart of a communication method according to an embodiment of this application;
FIG. 7b is a flowchart of a communication method according to an embodiment of this application;
FIG. 7c is a flowchart of a communication method according to an embodiment of this application;
FIG. 8 is a flowchart of a communication method according to an embodiment of this application;
FIG. 9 is a schematic diagram of a new protocol stack between a terminal device and an access network device according to an embodiment of this application;
FIG. 10 is a flowchart of a communication method according to an embodiment of this application;
FIG. 11 is a flowchart of a communication method according to an embodiment of this application;
FIG. 12 is a flowchart of a communication method according to an embodiment of this application;
FIG. 13 is a flowchart of a communication method according to an embodiment of this application;
FIG. 14 is a schematic diagram of composition of a first access network device according to an embodiment of this application;
FIG. 15 is a schematic diagram of composition of a second access network device according to an embodiment of this application; and
FIG. 16 is a schematic diagram of composition of a terminal device according to an embodiment of this application.

### DESCRIPTION OF EMBODIMENTS

Before embodiments of this application are described, technical terms used in embodiments of this application are described.

Network slice: The network slice is a logical network that can provide a specific network capability and a network feature.

Specifically, single network slice selection assistance information (single network slice selection assistance information, S-NSSAI) may be used as identifier information of the network slice, to distinguish between different network slices.

The S-NSSAI may include slice/service type (slice/service type, SST) information. The SST information is for describing an expected behavior of the network slice, for example, for describing a slice/service type of the network slice. This is not limited.

For example, the slice/service type (slice/service type, SST) of the network slice may include an enhanced mobile broadband (enhanced mobile broadband, eMBB), ultra-reliable low-latency communication (ultra-reliable low-latency communication, URLLC), massive internet of things (massive Internet of things, MIoT), vehicle-to-everything (vehicle-to-everything, V2X), or the like. This is not limited.

Optionally, the S-NSSAI further includes slice differentiator (slice differentiator, SD) information. The SD information is complementary information of the SST information. When the SST information points to a plurality of network slices, the SD information may assist, so that the SD information and the SST information correspond to a unique network slice.

Traffic steering (traffic steering): The traffic steering means to steer traffic to a specific access network device or cell, to optimize overall performance of a communication system, for example, optimize resource utilization, ensure user service performance, or reduce overall energy consumption of the communication system. This is not limited.

In a communication system, as a deployment density of access network devices increases, operation costs of the communication system is higher due to increase in both energy consumption and a price of the access network device. Based on this, the access network device may perform an energy saving operation based on a load status of a cell. Alternatively, the access network device may exchange load statuses of respective cells with an adjacent access network device, to perform load balancing based on a load status of each cell; and perform an energy saving operation, to make the load statuses of the cells in the communication system approximately consistent. Therefore, overall energy consumption of the communication system is reduced, and the operation costs of the communication system are reduced.

For example, the energy saving operation may include radio frequency channel shutdown, carrier shutdown, symbol shutdown, or cell shutdown. This is not limited.

The radio frequency channel shutdown may mean that when there is no service or service load is low in a cell in a time period, the access network device may disable a part or all of transmitting channels of the cell, to achieve an energy-saving effect. The carrier shutdown may mean that when a quantity of terminal devices on a carrier is small, the access network device may migrate the terminal device to a target carrier accessible in terms of load, and disable the carrier, to achieve an energy-saving effect. The symbol shutdown may mean that when the access network device determines, through detection, that no data is sent on some symbols of a subframe, the access network device may turn off a power amplifier in periodicities of the symbols on which no data is sent, to achieve an energy-saving effect. The cell shutdown may mean that when there is no service or service load is low in a cell in a time period, the access network device may migrate a terminal device in the cell to a target cell accessible in terms of load, and disable the cell, to achieve an energy-saving effect.

However, when the access network device performs the energy saving operation based on the load status of the cell, the overall energy consumption of the communication system may fail to be reduced due to a service characteristic or improper load determining.

For example, a service 1 and a service 2 are transmitted by using an access network device 1 and an access network device 2. It is assumed that the access network device 1 and the access network device 2 use an energy consumption model shown in the following Table 1. To be specific, the access network device 1 includes 64 transmitting channels, a bandwidth is 100 MHz, static energy consumption is 500 W, a symbol shutdown energy saving ratio is 0.5, and energy consumption of a full-load power amplifier (power amplifier, PA) is 523 W. The access network device 2 includes four transmitting channels, a bandwidth is 20 MHz, static energy consumption is 250 W, a symbol shutdown energy saving ratio is 0.8, and energy consumption of a full-load PA is 290 W.

**Table 1**

| | Static energy consumption | Symbol shutdown energy saving ratio | Energy consumption of a full-load PA |
|---|---|---|---|
| Access network device 1 (100 M/64 T) | 500 W | 0.5 | 523 W |
| Access network device 2 (20 M/4 T) | 250 W | 0.8 | 290 W |

If the service 1 is completely transmitted by the access network device 1, and the service 2 is evenly transmitted by the access network device 1 and the access network device 2 (where to be specific, the access network device 1 and the access network device 2 respectively transmit 50% traffic of the service 2), it is assumed that when the access network device 1 performs service transmission, physical resource block (physical resource block, PRB) utilization corresponding to the service 1 is 10%, and PRB utilization corresponding to the service 2 is 2%, and when the access network device 2 performs service transmission, PRB utilization corresponding to the service 2 is 20%. In this case, based on the energy consumption model shown in Table 1, it can be learned that overall PRB utilization of the access network device 1 is 100%^{∗}10%+50%^{∗}2%=11%, and energy consumption is approximately 1573.23 W; and overall PRB utilization of the access network device 2 is 50%*20%=10%, and energy consumption is approximately 859 W. In this case, the access network device 1 and the access network device 2 achieve load balancing, and total energy consumption of the access network device 1 and the access network device 2 is approximately 2432.23 W.

If the service 1 is completely transmitted by the access network device 1, and the service 2 is completely transmitted by the access network device 2, it is assumed that when the access network device 1 performs service transmission, physical resource block (physical resource block, PRB) utilization corresponding to the service 1 is 10%, and when the access network device 2 performs service transmission, PRB utilization corresponding to the service 2 is 20%. In this case, based on the energy consumption model shown in Table 1, it can be learned that overall PRB utilization of the access network device 1 is 10%, and energy consumption is approximately 1302.3 W; and overall PRB utilization of the access network device 2 is 20%, and energy consumption is approximately 908 W. In this case, although load of the access network device 1 and load of the access network device 2 are unbalanced, total energy consumption of the access network device 1 and the access network device 2 is approximately 2214.3 W. In comparison with the foregoing that service transmission is performed based on a load balancing mechanism, the overall energy consumption of the communication system is significantly reduced.

In addition, when the access network device performs the energy saving operation based on the load status of the cell, quality of service of the terminal device may alternatively be poor due to a service characteristic or improper load determining.

For example, load of a terminal device in a cell is low. When determining, based on a load status of the cell, that a radio frequency channel shutdown condition is satisfied, the access network device may disable a transmitting channel of the cell, and migrate the terminal device in the cell to a target cell. However, because the access network device migrates the terminal device in the cell to the target cell, if traffic of the terminal device in the target cell increases rapidly, the target cell is overloaded, and quality of service of the terminal device cannot be satisfied. Consequently, the quality of service of the terminal device is poor.

To resolve the foregoing technical problem that when the access network device performs the energy saving operation based on the load status of the cell, the overall energy consumption of the communication system cannot be reduced because the quality of service of the terminal device is poor due to the service characteristic or the improper load determining, an embodiment of this application provides a communication method. A first access network device may perform an energy saving operation based on obtained first energy efficiency, where the first energy efficiency may be determined based on performance and energy consumption that correspond to a first object in a second access network device. In this embodiment of this application, the first access network device performs the energy saving operation based on the first energy efficiency corresponding to the second access network device, so that overall energy consumption of a communication system can be effectively reduced.

The following describes implementations of embodiments of this application in detail with reference to accompanying drawings in this specification.

The communication method provided in this embodiment of this application may be applied to any communication system. The communication system may be a 3rd generation partnership project (3rd generation partnership project, 3GPP) communication system, for example, a long term evolution (long term evolution, LTE) system, or may be a 5th generation (5th generation, 5G) mobile communication system, a new radio (new radio, NR) system, or a new radio vehicle-to-everything (new radio vehicle-to-everything, NR V2X) system. Alternatively, the communication method may be applied to an LTE and 5G hybrid networking system, a device-to-device (device-to-device, D2D) communication system, a machine-to-machine (machine-to-machine, M2M) communication system, an internet of things (Internet of Things, IoT), another next generation communication system, or a non-3GPP communication system. This is not limited.

The communication method provided in this embodiment of this application may be applied to various communication scenarios, for example, may be applied to one or more of the following communication scenarios: eMBB, URLLC, MIoT, V2X, machine type communication (machine type communication, MTC), massive machine-type communications (massive machine-type communications, mMTC), D2D, and an internet of things (internet of things, IoT).

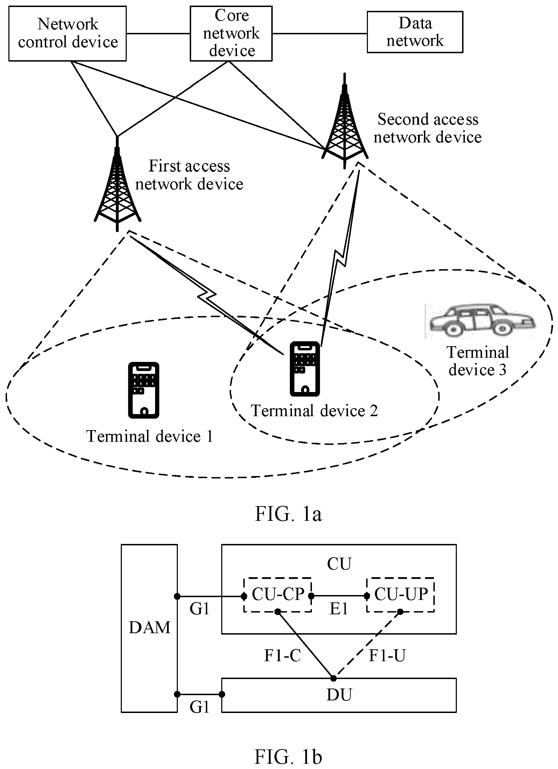

FIG. 1a is used as an example below to describe the communication method provided in this embodiment of this application.

FIG. 1a is a schematic diagram of a communication system according to an embodiment of this application. As shown in FIG. 1a, the communication system may include a plurality of access network devices and a plurality of terminal devices. The plurality of access network devices may include a first access network device and a second access network device.

The terminal device may communicate with the first access network device or the second access network device. Alternatively, the terminal device may simultaneously communicate with the first access network device and the second access network device, that is, perform multi-radio dual connectivity (multi-radio dual connectivity, MR-DC). In an MR-DC scenario, the first access network device may be a primary access network device, and the second access network device may be a secondary access network device. The first access network device and the second access network device may be access network devices of different communication standards, or may be access network devices of a same communication standard. This is not limited.

The terminal device (terminal) in FIG. 1a may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be a wireless terminal or a wired terminal. The wireless terminal may refer to a device having a wireless transceiver function, and may be deployed on land, including an indoor or outdoor device, a handheld device, or a vehicle-mounted device; or may be deployed on a water surface (for example, on a steamboat); or may be deployed in the air (for example, on an airplane, a balloon, or a satellite). The terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device (which may also be referred to as a wearable intelligent device), a tablet computer or a computer with a wireless transceiver function, a virtual reality (virtual reality, VR) terminal, a wireless terminal in industrial control, a wireless terminal in self driving, a wireless terminal in telemedicine, a wireless terminal in a smart grid, a wireless terminal in a smart city (smart city), a wireless terminal in a smart home (smart home), a vehicle-mounted terminal, a vehicle with a vehicle-to-vehicle (vehicle-to-vehicle, V2V) communication capability, an intelligent connected vehicle, an uncrewed aerial vehicle with an uncrewed aerial vehicle to uncrewed aerial vehicle (UAV to UAV, U2U) communication capability, or the like. The terminal may alternatively be a terminal in a next generation communication system, for example, a terminal in a 5G communication system, a terminal in a future evolved public land mobile network (public land mobile network, PLMN), or a terminal in an NR communication system. This is not limited.

The access network device in FIG. 1a may be any device that has a wireless transceiver function and that is configured to access the terminal device to a wireless network. The access network device is mainly configured to implement a function such as a radio physical control function, resource scheduling and radio resource management, radio access control, mobility management, quality of service management, or data encryption and compression, and provides a reliable wireless transmission protocol and a data encryption protocol. The access network device may also be referred to as an access network (access network, AN)/radio access network (radio access network, RAN) device. Specifically, the access network device may be a device supporting wired access, or may be a device supporting wireless access. For example, the access network device may be a NodeB (NodeB, NB), an enhanced NodeB (enhanced NodeB, eNB), a next generation NodeB (NR NodeB, gNB), a next generation evolved NodeB (next generation evolved NodeB, ng-eNB), a central unit (central unit, CU), a distributed unit (distributed unit, DU), a central unit-control plane (central unit-control plane, CU-CP), a central unit-user plane (central unit-user plane, CU-UP), a data analysis and management (data analysis and management, DAM), an access point (access point, AP), a transmission reception point (transmission reception point, TRP), a transmission point (transmission point, TP), or another access node. This is not limited.

The gNB may provide the terminal device with a protocol and a function of a control plane and/or a user plane of new radio (new radio, NR). The ng-eNB may provide the terminal device with a protocol and a function of a control plane and/or a user plane of evolved universal terrestrial radio access (evolved universal terrestrial radio access, E-UTRA). The CU may include a radio resource control (radio resource control, RRC) layer, a service data adaptation protocol (service data adaptation protocol, SDAP) layer, and a packet data convergence protocol (packet data convergence protocol, PDCP) layer of the gNB, or an RRC layer and a PDCP layer of the ng-eNB. The DU may include a radio link control (radio link control, RLC) layer, a media intervention control (media access control, MAC) layer, and a physical layer of the gNB or the ng-eNB. The CU-CP is a control plane of the CU, and may include an RRC layer in the gNB-CU or the ng-eNB-CU, and a control plane at a PDCP layer. The CU-UP is a user plane of the CU, and may include an SDAP layer in the gNB-CU or the ng-eNB-CU, and a user plane at a PDCP layer. The DAM may be for implementing a function such as data collection, machine learning (machine learning, ML) model training, ML model generation, ML model update, or ML model distribution.

It should be noted that a wireless communication network is developing towards a direction of a diversified, broadband, integrated, and intelligent network. A higher spectrum, a wider bandwidth, and more antennas are used for wireless transmission. Consequently, a conventional communication method is excessively complex, and performance cannot be ensured. In addition, with explosive development of an intelligent terminal and various applications, behavior and a performance factor of the wireless communication network are more dynamic and unpredictable than those in the past. It is a challenge for a current operator to operate the more complex wireless communication network in a manner of low costs and high efficiency. Therefore, artificial intelligence (artificial intelligence, AI)/ML will undertake a more important task in the wireless communication network. The AI is a technology that uses a computer program to present human intelligence. An ML side focuses on developing a computer program that can access data and perform self-learning by using the data. In embodiments of this application, the artificial intelligence and the machine learning are not distinguished. In other words, an ML model may also be referred to as an AI model. This is not limited.

For example, based on the foregoing descriptions, refer to FIG. 1b. The foregoing access network device is described by using a separated access network device as an example. The separated access network device may be divided into one CU, at least one DU, and one DAM based on functions, where the CU and the DU may be connected through an F1 interface. Further, the CU may include one CU-CP and at least one CU-UP. The CU-CP and the CU-UP may be connected through an E1 interface, the CU-CP and the DU may be connected through a control plane interface of F1 (F1-C), and the CU-UP and the DU may be connected through a user plane interface of F1 (F1-U). Further, the CU, the DU, or the CU-CP may be respectively connected to the DAM through a G1 interface. Optionally, the DAM may be respectively used as an internal function of the CU, the DU, or the CU-CP. In this case, there is no G1 interface (where in other words, the G1 interface is an internal interface and is invisible to the outside).

In addition, in FIG. 1a, the communication system may further include a core network (core network, CN) device and a data network (data network, DN). The access network device may communicate with the core network device, and the terminal device may communicate with the data network via the access network device and the core network device sequentially.

The core network device may be configured to send, to the data network, data of the terminal device that is sent by the access network device. Specifically, the core network device may be configured to implement a service such as user access control, mobility management, session management, user security authentication, or accounting. The core network device may include a plurality of functional entities. For example, the functional entity may be an access and mobility management function unit (access and mobility management function, AMF) or a network data analytics function unit (network data analytics function, NWDAF).

The access and mobility management function unit is mainly responsible for a work such as access control of user equipment, mobility management, attachment and detachment, gateway selection, or signaling exchange between functional network elements, for example, managing a user registration status, a user connection status, user registration and network access, tracking area update, user authentication during a cell handover, and key security.

The network data analytics function unit is mainly responsible for a function such as data collection or analysis.

It should be noted that, in addition to the foregoing functional entities, the core network device may further include a session management function unit (session management function, SMF), a policy control function unit (policy control function, PCF), a user plane function unit (user plane function, UPF), an application function unit (application function, AF), or the like. This is not limited.

The data network may be an operator network that provides a data transmission service for the terminal device, for example, an operator network that may provide an IP multimedia service (IP multimedia service, IMS) for the terminal device. An application server (application server, AS) may be deployed in the DN, and the application server may provide the data transmission service for the terminal device.

Optionally, in FIG. 1a, the communication system further includes another device, for example, a network control device. The network control device may be an operations, administration and maintenance (operations, administration and maintenance, OAM) system, and may also be referred to as a network management system. The network control device may manage the access network device and the core network device.

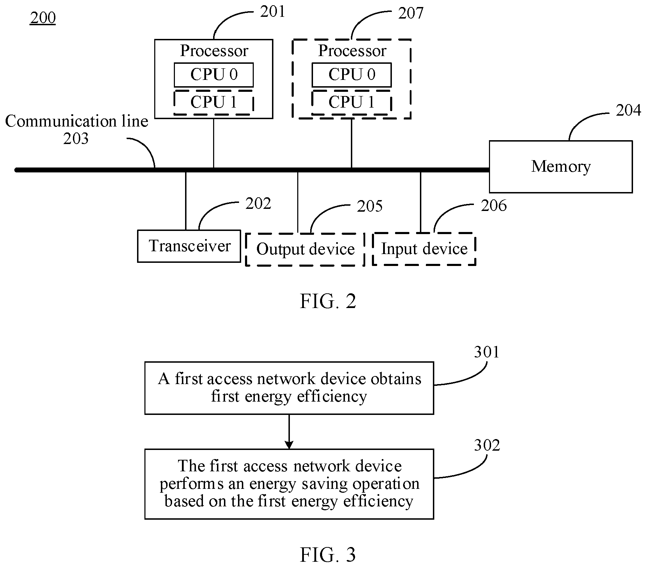

During specific implementation, as shown in FIG. 1a and FIG. 1b, for example, each terminal device and each access network device may use a composition structure shown in FIG. 2, or include components shown in FIG. 2. FIG. 2 is a schematic diagram of composition of a communication apparatus 200 according to an embodiment of this application.

The communication apparatus 200 may be a terminal device, or a chip or a system-on-a-chip in the terminal device; or may be an access network device, or a chip or a system-on-a-chip in the access network device. As shown in FIG. 2, the communication apparatus 200 includes a processor 201, a transceiver 202, and a communication line 203. Further, the communication apparatus 200 may further include a memory 204. The processor 201, the memory 204, and the transceiver 202 may be connected through the communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The transceiver 202 is configured to communicate with another device or another communication network. The another communication network may be an Ethernet, a radio access network (radio access network, RAN), a wireless local area network (wireless local area network, WLAN), or the like. The transceiver 202 may be a module, a circuit, a transceiver, or any apparatus that can implement communication.

The communication line 203 is configured to transmit information between the components included in the communication apparatus 200.

The memory 204 is configured to store instructions. The instructions may be a computer program.

The memory 204 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray disc, or the like), a magnetic disk storage medium or another magnetic storage device, or the like. This is not limited.

It should be noted that the memory 204 may be independent of the processor 201, or may be integrated with the processor 201. The memory 204 may be configured to store instructions, program code, some data, or the like. The memory 204 may be located inside the communication apparatus 200, or may be located outside the communication apparatus 200. This is not limited. The processor 201 is configured to execute the instructions stored in the memory 204, to implement the communication method provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device, for example, a keyboard, a mouse, a microphone, or a joystick, and the output device 205 is a device, for example, a display or a speaker (speaker).

It should be noted that the communication apparatus 200 may be a desktop computer, a portable computer, a network server, a mobile phone, a tablet computer, a wireless terminal, an embedded device, a chip system, or a device having a structure similar to a structure in FIG. 2. In addition, the composition structure shown in FIG. 2 does not constitute a limitation on the communication apparatus. In addition to the components shown in FIG. 2, the communication apparatus may include more or fewer components than components shown in the figure, combine some components, or have different component arrangements.

In this embodiment of this application, the chip system may include a chip, or may include a chip and another discrete component.

In addition, for actions, terms, and the like in embodiments of this application, refer to each other. This is not limited. In embodiments of this application, names of messages exchanged between devices, names of parameters in the messages, or the like are merely examples. Other names may alternatively be used during specific implementation. This is not limited.

With reference to the communication system shown in FIG. 1a, refer to FIG. 3. The following describes a communication method provided in an embodiment of this application. A first access network device may be any access network device in the communication system shown in FIG. 1a, a second access network device may be any access network device other than the first access network device in the communication system shown in FIG. 1a, and a terminal device may be any terminal device in the communication system shown in FIG. 1a. Both the terminal device and the access network device in the following embodiments may have the components shown in FIG. 2.

FIG. 3 is a flowchart of a communication method according to an embodiment of this application. As shown in FIG. 3, the method may include the following steps.

Step 301: A first access network device obtains first energy efficiency.

The first energy efficiency (energy efficiency, EE) may be determined based on performance and energy consumption that correspond to a first object in a second access network device.

For example, the first energy efficiency may indicate performance that corresponds to the first object in the second access network device within specific energy consumption.

For example, the energy consumption corresponding to the first object may indicate energy consumed by the first object, and may be represented by joules.

For example, the first object may include one or more of the following: a network slice, a service, or an area.

The area may be a cell, a station, a tracking area (tracking area, TA), or a RAN-based notification area (RAN-based notification area, RNA), or may be a specific customized range. This is not limited.

The station may be an access network device. When the access network device is the separated access network device shown in FIG. 1b, the station may be a CU, a DU, a CU-CP, or a CU-UP. This is not limited. The TA or the RNA may be a set including one or more cells.

For example, the performance corresponding to the first object may include one or more of the following: a data volume (data volume), a latency (latency), or a quantity of terminal devices.

The data volume may indicate an uplink data volume, a downlink data volume, or a total data volume that corresponds to the first object, and may be represented by bits, bytes, or the like. This is not limited. The latency may indicate an uplink latency, a downlink latency, or a round-trip latency of a packet corresponding to the first object, and may be represented by us, ms, s, or the like. This is not limited. The terminal device may be a terminal device that transmit data by using the first object. The terminal device may be in one or more of the following: an RRC connected mode (RRC CONNECTED), an RRC inactive mode (RRC_INACTIVE), or an RRC idle mode (RRC IDLE). The quantity of terminal devices may be one or more of the following: a maximum quantity, an average quantity, an uplink quantity, a downlink quantity, or a total quantity.

The maximum quantity may be a maximum quantity of terminal devices that transmit data by using the first object in a time period. The average quantity may be an average value of quantities of terminal devices that transmit data by using the first object in a plurality of time periods. The uplink quantity may be a quantity of terminal devices that transmit uplink data by using the first object in a time period. The downlink quantity may be a quantity of terminal devices that transmit downlink data by using the first object in a time period. The total quantity may be a total quantity of terminal devices that transmit data by using the first object in a time period.

Optionally, the performance of the first object further includes reliability.

For example, the reliability may be an inverse function of the latency, that is, reliability= l/latency.

It should be noted that a larger data volume indicates higher performance; a shorter latency indicates higher performance; a larger quantity of terminal devices indicates higher performance; and higher reliability indicates higher performance.

In a possible design, when the first object is the network slice, first energy efficiency=performance/energy consumption of the network slice.

The energy consumption of the network slice may be energy consumed by the network slice in the second access network device. The performance of the network slice may be one or more of the following performance within the energy consumption of the network slice: a data volume corresponding to the network slice, a latency corresponding to the network slice, a quantity of terminal devices corresponding to the network slice, or reliability corresponding to the network slice.

In another possible design, when the first object is the service, first energy efficiency=performance/energy consumption of the service.

The energy consumption of the service may be energy consumed when the second access network device transmits the service. The performance of the service may be one or more of the following performance within the energy consumption of the service: a data volume corresponding to the service, a latency corresponding to the service, a quantity of terminal devices corresponding to the service, or reliability corresponding to the service.

In another possible design, when the first object is the cell, first energy efficiency=performance/energy consumption of the cell.

The energy consumption of the cell may be energy consumed by the cell in the second access network device. The performance of the cell may be one or more of the following performance within the energy consumption of the cell: a data volume corresponding to the cell, a latency corresponding to the cell, a quantity of terminal devices corresponding to the cell, or reliability corresponding to the cell.

In another possible design, when the first object is the station, first energy efficiency=performance/energy consumption of the station.

The energy consumption of the station may be energy consumed by the station in the second access network device. The performance of the station may be one or more of the following performance within the energy consumption of the station: a data volume corresponding to the station, a latency corresponding to the station, a quantity of terminal devices corresponding to the station, or reliability corresponding to the station.

In another possible design, when the first object is the TA, first energy efficiency=performance/energy consumption of the TA.

The energy consumption of the TA may be energy consumed by the TA in the second access network device. The performance of the TA may be one or more of the following performance within the energy consumption of the TA: a data volume corresponding to the TA, a latency corresponding to the TA, a quantity of terminal devices corresponding to the TA, or reliability corresponding to the TA.

In another possible design, when the first object is the RNA, first energy efficiency=performance/energy consumption of the RNA.

The energy consumption of the RNA may be energy consumed by the RNA in the second access network device. The performance of the RNA may be one or more of the following performance within the energy consumption of the RNA: a data volume corresponding to the RNA, a latency corresponding to the RNA, a quantity of terminal devices corresponding to the RNA, or reliability corresponding to the RNA.

Optionally, when obtaining the first energy efficiency, the first access network device further obtains first identifier information corresponding to the first energy efficiency.

The first identifier information may indicate the first object. The first access network device may determine, based on the first identifier information, the first object corresponding to the first energy efficiency.

In a possible design, when the first object is the network slice, the first identifier information may be S-NSSAI.

For example, the network slice includes a network slice 1, a network slice 2, and a network slice 3; and identifier information of the network slice 1 is S-NSSAI 1, identifier information of the network slice 2 is S-NSSAI 2, and identifier information of the network slice 3 is S-NSSAI 3. Assuming that the first energy efficiency EE and the first identifier information S-NSSAI that are obtained by the first access network device are shown in the following Table 2, the first access network device may determine, based on the S-NSSAI 1, that first energy efficiency EE 1 corresponds to the network slice 1; determine, based on the S-NSSAI 2, that first energy efficiency EE 2 corresponds to the network slice 2; and determine, based on the S-NSSAI 3, that first energy efficiency EE 3 corresponds to the network slice 3.

**Table 2**

| |
|---|
| >S-NSSAI 1 |
| >>EE 1 |
| >S-NSSAI 2 |
| >>EE 2 |
| >S-NSSAI 3 |
| >>EE 3 |

The S-NSSAI may be identifier information that may be for distinguishing network slices, such as a digit, a letter, and/or a character. This is not limited.

For example, a network slice in a communication system includes a network slice 1, a network slice 2, and a network slice 3. S-NSSAI 1 corresponding to the network slice 1 may be 101, S-NSSAI 2 corresponding to the network slice 2 may be 102, and S-NSSAI 3 corresponding to the network slice 3 may be 103.

It should be noted that the S-NSSAI may be pre-negotiated between the first access network device and the second access network device, may be pre-negotiated between a core network device and the access network device, may be pre-configured by a network control device, or may be pre-specified in a communication protocol. This is not limited. In another possible design, when the first object is the service, the first identifier information may be a specific service type, may be identifier information that may be for distinguishing services, such as a digit, a letter, and/or a character, may be a 5G quality of service identifier (5G quality of service identifier, 5QI), or the like. This is not limited.

The 5QI may indicate a 5G QoS characteristic (for example, a resource type, a default priority, a packet delay budget, a false positive rate, default maximum data burst traffic, or a default average window), namely, a specific parameter (for example, a scheduling weight, an admission threshold, a queue management threshold, or a link layer protocol configuration) of an access node that controls QoS forwarding processing of a QoS flow.

For example, the service includes an eMBB service, a URLLC service, an MIoT service, and a V2X service. Assuming that the first energy efficiency EE and the first identifier information that are obtained by the first access network device are shown in Table 3, the first access network device may determine, based on Table 3, that first energy efficiency EE 1 corresponds to the eMBB service, first energy efficiency EE 2 corresponds to the URLLC service, first energy efficiency EE 3 corresponds to the MIoT service, and first energy efficiency EE 4 corresponds to the V2X

**Table 3**

| |
|---|
| >eMBB |
| >>EE 1 |
| >URLLC |
| >>EE 2 |
| >MIoT |
| >>EE 3 |
| >V2X |
| >>EE 4 |

In another example, the service includes an eMBB service, a URLLC service, an MIoT service, and a V2X service; and identifier information of the eMBB service is 1, identifier information of the URLLC service is 2, identifier information of the MIoT service is 3, and identifier information of the V2X service is 4. Assuming that the first energy efficiency EE and the first identifier information that are obtained by the first access network device are shown in Table 4, the first access network device may determine, based on Table 4, that first energy efficiency EE 1 corresponds to the eMBB service, first energy efficiency EE 2 corresponds to the URLLC service, first energy efficiency EE 3 corresponds to the MIoT service, and first energy efficiency EE 4 corresponds to the V2X service.

**Table 4**

| |
|---|
| >1 |
| >>EE 1 |
| >2 |
| >>EE 2 |
| >3 |
| >>EE 3 |
| >4 |
| >>EE 4 |

It should be noted that the first identifier information corresponding to each service may be pre-negotiated between the first access network device and the second access network device, may be pre-negotiated between a core network device and the access network device, may be pre-configured by a network control device, or may be pre-specified in a communication protocol. This is not limited.

In another possible design, when the first object is the cell, the first identifier information may be a new radio cell global identifier (NR cell global identifier, NCGI), may be a physical cell identifier (physical cell identifier, PCI), or may be other identifier information that may be for distinguishing cells. This is not limited.

For example, the cell includes a cell 1, a cell 2, and a cell 3; and identifier information of the cell 1 is NCGI 1, identifier information of the cell 2 is NCGI 2, and identifier information of the cell 3 is NCGI 3. Assuming that the first energy efficiency EE and the first identifier information NCGI that are obtained by the first access network device are shown in the following Table 5, the first access network device may determine, based on the NCGI 1, that first energy efficiency EE 1 corresponds to the cell 1; determine, based on the NCGI 2, that first energy efficiency EE 2 corresponds to the cell 2; and determine, based on the NCGI 3, that first energy efficiency EE 3 corresponds to the cell 3.

**Table 5**

| |
|---|
| >NCGI 1 |
| >>EE 1 |
| >NCGI 2 |
| >>EE 2 |
| >NCGI 3 |
| >>EE 3 |

In another possible design, when the first object is the TA, the first identifier information may be a tracking area identity (tracking area identity, TAI), or may be other identifier information that may be for distinguishing TAs. This is not limited.

For example, the TA includes a TA 1, a TA 2, and a TA 3; and identifier information of the TA 1 is TAI 1, identifier information of the TA 2 is TAI 2, and identifier information of the TA 3 is TAI 3. Assuming that the first energy efficiency EE and the first identifier information TAI that are obtained by the first access network device are shown in the following Table 6, the first access network device may determine, based on the TAI 1, that first energy efficiency EE 1 corresponds to the TA 1; determine, based on the TAI 2, that first energy efficiency EE 2 corresponds to the TA 2; and determine, based on the TAI 3, that first energy efficiency EE 3 corresponds to the TA 3.

**Table 6**

| |
|---|
| >TAI 1 |
| >>EE 1 |
| >TAI 2 |
| >>EE 2 |
| >TAI 3 |
| >>EE 3 |

In another possible design, when the first object is the RNA, the first identifier information may be identifier information that may be for distinguishing RNAs, such as a digit, a letter, and/or a character, or may be other identifier information that may be for distinguishing RNAs. This is not limited.

For example, the RNA includes an RNA 1, an RNA 2, and an RNA 3; and identifier information of the RNA 1 is R 1, identifier information of the RNA 2 is R 2, and identifier information of the RNA 3 is R 3. Assuming that the first energy efficiency EE and the first identifier information that are obtained by the first access network device are shown in the following Table 7, the first access network device may determine, based on the R 1, that first energy efficiency EE 1 corresponds to the RNA 1; determine, based on the R 2, that first energy efficiency EE 2 corresponds to the RNA 2; and determine, based on the R 3, that first energy efficiency EE 3 corresponds to the RNA 3.

**Table 7**

| |
|---|
| >R 1 |
| >>EE 1 |
| >R 2 |
| >>EE 2 |
| >R 3 |
| >>EE 3 |

It should be noted that the first identifier information corresponding to each RNA may be pre-negotiated between the first access network device and the second access network device, may be pre-negotiated between a core network device and the access network device, may be pre-configured by a network control device, or may be pre-specified in a communication protocol. This is not limited.

In another possible design, when the first object is the station, the first identifier information may be identifier information that may be for distinguishing stations, such as a digit, a letter, and/or a character, or may be other identifier information that may be for distinguishing stations. This is not limited.

For example, the identifier information of the station may be a global next generation radio access network node identifier (next generation radio access network node ID, NG-RAN Node ID), a gNB CU identifier (gNB-CU ID), a gNB CU-CP identifier (gNB-CU-CP ID), a gNB CU-UP identifier (gNB-CU-UP ID), or a gNB DU identifier (gNB-DU ID).

Optionally, a type of the first energy efficiency includes energy efficiency statistics information and/or target energy efficiency information.

The energy efficiency statistics information may be a statistical result of energy efficiency that has occurred.

For example, the first energy efficiency may be energy efficiency corresponding to the first object in the second access network device in last 10 hours.

The target energy efficiency information may be an energy efficiency result obtained by predicting energy efficiency in a future time period, may be described as an energy efficiency result obtained by estimating energy efficiency in a future time period, or may be described as energy efficiency in a future time period.

For example, the first energy efficiency may be an energy efficiency result obtained by predicting energy efficiency corresponding to the first object in the second access network device in future 10 hours.

For example, the second access network device may use current energy efficiency information as input of an ML model based on an AI/ML method, obtain output of the ML model, and determine the output of the ML model as the target energy efficiency information. For example, the second access network device pre-configures a trained ML model (for example, an Alex network AlexNet). The second access network device inputs the current energy efficiency information of the first object into the ML model, and the ML model may output future energy efficiency information of the first object as the target energy efficiency information.

Optionally, the target energy efficiency information further includes a confidence level.

The confidence level may indicate credibility of the target energy efficiency information. The confidence level represents prediction accuracy of the predicted energy efficiency information of the first object in the future time period.

For example, the confidence level may be represented by a percentage. For example, the confidence level of the target energy efficiency information may be represented as 60%, 70%, or 85%. A higher confidence level indicates higher credibility of target energy efficiency information corresponding to the confidence level.

In another example, the confidence level may alternatively be high, medium, or low, to indicate the credibility of the corresponding target energy efficiency information. This is not limited.

Optionally, the first energy efficiency further includes first time and/or second time.

The first time may indicate time corresponding to the first energy efficiency, and the first time may also be referred to as analysis target time. The second time may indicate time at which the second access network device generates the first energy efficiency.

For example, the first time may include start time and/or end time.

For example, current time is 16:00 on December 11, 2020. Assuming that the start time corresponding to the first time is 08:00 on December 11, 2020, and the end time is 12:00 on December 11, 2020, it indicates that the first energy efficiency is energy efficiency statistics information from 08:00 to 12:00 on December 11, 2020.

For another example, current time is 16:00 on December 11, 2020. Assuming that the start time corresponding to the first time is 17:00 on December 11, 2020, and the end time is 18:00 on December 11, 2020, it indicates that the first energy efficiency is target energy efficiency information from 17:00 to 18:00 on December 11, 2020.

For example, the second time may be a timestamp, and the time at which the first energy efficiency is generated is indicated by the timestamp.

For example, the second time is 16:00 on December 11, 2020. It indicates that the first energy efficiency is generated by the second access network device at 16:00 on December 11, 2020.

Optionally, after receiving the first energy efficiency, the first access network device determines, based on the second time included in the first energy efficiency, whether to use the first energy efficiency.

For example, the first access network device obtains, before 16:00 on December 11, 2020, first energy efficiency 1 and first energy efficiency 2 that correspond to the second access network device. Assuming that first time corresponding to the first energy efficiency 1 and first time corresponding to the first energy efficiency 2 are both 17:00 to 18:00 on December 11, 2020, the first access network device may determine, based on the first time, that both the first energy efficiency 1 and the first energy efficiency 2 are the target energy efficiency information. Assuming that second time corresponding to the first energy efficiency 1 is 15:00 on December 11, 2020, and second time corresponding to the first energy efficiency 2 is 15:50 on December 11, 2020, because in comparison with the first energy efficiency 1, the first energy efficiency 2 is newly generated by the second access network device, and accuracy is higher, the first access network device may determine, from the first energy efficiency 1 and the first energy efficiency 2 that are obtained, to use the first energy efficiency 2, so that accuracy of the first energy efficiency is improved.

In a possible design, the first access network device receives the first energy efficiency sent by the second access network device.

When there is a direct communication interface (for example, an Xn interface) between the first access network device and the second access network device, the first access network device may directly receive the first energy efficiency sent by the second access network device.

For example, when the first access network device is a base station, a CU, or a CU-CP, and the second access network device is a base station, a CU, or a CU-CP, the first access network device may receive, based on the Xn interface, the first energy efficiency sent by the second access network device.

In another example, when the first access network device is a CU, a DU, a CU-UP, or a CU-CP, and the second access network device is a CU, a CU-CP, a DU, or a CU-UP, the first access network device may directly receive, based on the interface shown in FIG. 1b, the first energy efficiency that is related to the second access network device and that is sent by the second access network device.

In another possible design, the first access network device receives the first energy efficiency in the second access network device sent by a relay access network device.

The relay access network device may be an access network device that may simultaneously communicate with the first access network device and the second access network device in the communication system shown in FIG. 1a or FIG. 1b.

For example, the first access network device is a DU 1 or a CU-UP 1, the second access network device is a DU 2 or a CU-UP 2, and the relay access network device is a CU or a CU-CP. The relay access network device may receive, through the interface shown in FIG. 1b, the first energy efficiency sent by the second access network device, and forward the first energy efficiency to the first access network device.

In another possible design, the first access network device receives the first energy efficiency in the second access network device sent by a core network device.

For example, the first access network device is a base station, a CU, or a CU-CP, and the second access network device is a base station, a CU, or a CU-CP. When there is no direct communication interface between the first access network device and the second access network device, the second access network device may send the first energy efficiency to the core network device, and the core network device sends the first energy efficiency to the first access network device.

In another possible design, the first access network device receives the first energy efficiency in the second access network device sent by a network control device.

For example, the second access network device may send the first energy efficiency to the network control device, and the network control device sends the first energy efficiency to the first access network device.

In another possible design, the first access network device obtains, from a network control device, the first energy efficiency in the second access network device.

For example, the network control device obtains the first energy efficiency from the second access network device, and then the first access network device obtains, from the network control device, the first energy efficiency in the second access network device.

Optionally, when the access network device directly communicates with the access network device, information may be sent based on an existing protocol stack.

For example, the foregoing information may be carried in an Xn application protocol (Xn application protocol, XnAP). Alternatively, the information is sent between the access network devices by using a new protocol stack.

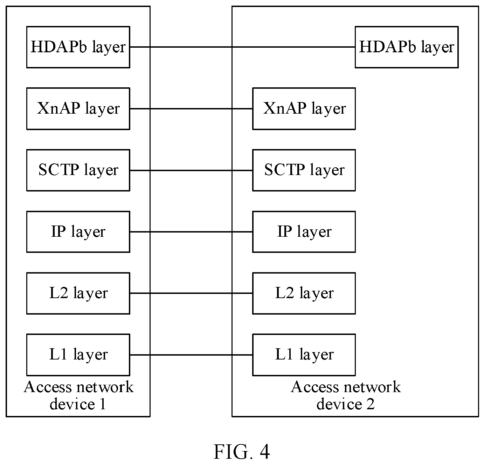

For example, information may be sent between an access network device 1 and an access network device 2 by using a protocol stack shown in FIG. 4. The protocol stack may include a high data analytics protocol type b (high data analytics protocol type b, HDAPb) layer, an Xn application protocol layer, a stream control transmission protocol (stream control transmission protocol, SCTP) layer, an IP layer, an L2 layer, and an L1 layer. An HDAPb protocol may support functions such as data transmission (for example, data segmentation or data sorting) and data security (for example, data integrity protection, data encryption, or data decryption) between access network devices. A service provided by the Xn application protocol may be used for the HDAPb protocol, in other words, an HDAPb message is carried in an XnAP message.

Optionally, when the access network device is a DU, a CU, or a CU-CP, information is sent between the DU and the CU/CU-CP based on an existing protocol stack. For example, the information is carried in an F1 application protocol (F1 application protocol, F1AP) message.

Alternatively, the information is sent between the DU and the CU/CU-CP by using a new protocol stack.

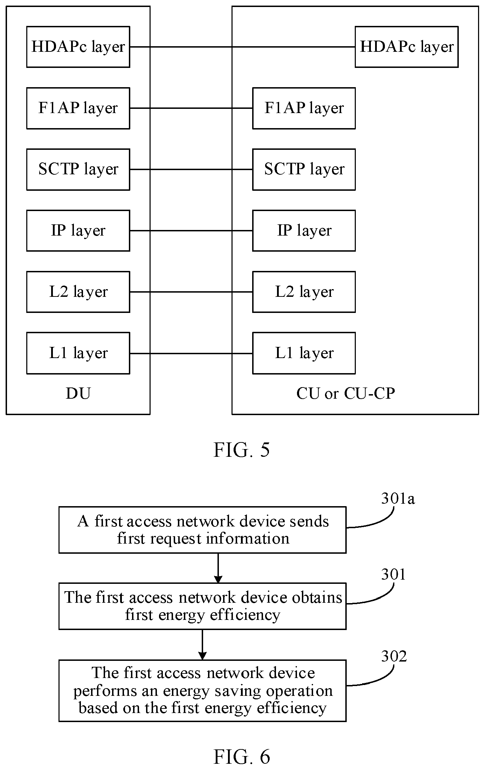

For example, the information may be sent between the DU and the CU/CU-CP by using a protocol stack shown in FIG. 5. The protocol stack may include a high data analytics protocol type c (high data analytics protocol type c, HDAPc) layer, an F1AP layer, an SCTP layer, an IP layer, an L2 layer, and an L1 layer. An HDAPc protocol may support functions such as data transmission (for example, data segmentation or data sorting) and data security (for example, data integrity protection, data encryption, or data decryption) between the DU and the CU/CU-CP. A service provided by the F1 application protocol may be used for the HDAPc protocol, in other words, an HDAPc message is carried in an F1AP message.

It should be noted that the first access network device may obtain, based on the foregoing descriptions, the first energy efficiency determined by the second access network device, or the first access network device may obtain, based on the foregoing descriptions, the performance and the energy consumption that correspond to the first object in the second access network device, and determine the first energy efficiency based on the performance and the energy consumption. This is not limited.

Step 302: The first access network device performs an energy saving operation based on the first energy efficiency. For example, the energy saving operation may include one or more of the following: radio frequency channel shutdown, carrier shutdown, symbol shutdown, or cell shutdown.

The radio frequency channel shutdown may mean that when there is no service or service load is low in a cell in a time period, the access network device may disable a part or all of transmitting channels of the cell, to achieve an energy-saving effect. The carrier shutdown may mean that when a quantity of terminal devices on a carrier is small, the access network device may migrate the terminal device to a target carrier accessible in terms of load, and disable the carrier, to achieve an energy-saving effect. The symbol shutdown may mean that when the access network device determines, through detection, that no data is sent on some symbols of a subframe, the access network device may turn off a power amplifier in periodicities of the symbols on which no data is sent, to achieve an energy-saving effect. The cell shutdown may mean that when there is no service or service load is low in a cell in a time period, the access network device may migrate a terminal device in the cell to a target cell accessible in terms of load, and disable the cell, to achieve an energy-saving effect.

It should be noted that the foregoing energy saving operation may alternatively be another operation that may be for reducing energy consumption. This is not limited.

Optionally, the first access network device hands over, based on the foregoing energy saving operation, a part or all of terminal devices corresponding to the first object to the second access network device.

For example, the first energy efficiency is the target energy efficiency information. When the first energy efficiency is greater than or equal to second energy efficiency, the first access network device may hand over a part or all of the terminal devices corresponding to the first object in the first access network device to the second access network device, so that no scheduling resource needs to be allocated to the terminal device handed over to the second access network device, a power amplifier in a symbol periodicity related to the terminal device handed over to the second access network device is turned off, and energy consumption of the first access network device is reduced.

The second energy efficiency may be determined by the first access network device based on communication performance and energy consumption that correspond to the first object in the first access network device.

It should be noted that, for specific descriptions of the second energy efficiency, refer to the foregoing descriptions of the first energy efficiency. Details are not described again.

Optionally, when the first energy efficiency obtained by the first access network device is the energy efficiency statistics information, the first access network device may use the current energy efficiency statistics information as input of an ML model based on an AI/ML method, and determine output of the ML model as the target energy efficiency information. For example, the first access network device pre-configures a trained ML model (for example, an Alex network AlexNet). The first access network device inputs the current energy efficiency statistics information of the first object into the ML model, and the ML model may output future energy efficiency information of the first object as the target energy efficiency information.

Based on the method shown in FIG. 3, the first access network device performs the energy saving operation based on the obtained first energy efficiency, so that overall energy consumption of a communication system can be effectively reduced.

Further, based on the method shown in FIG. 3, as shown in FIG. 6, before obtaining the first energy efficiency information, the first access network device may further perform the following step 301a.

Step 301a: The first access network device sends first request information.

The first request information may be for requesting the first energy efficiency in the second access network device.

For example, the first request information may include one or more of the following: identifier information of the first object, the type of the first energy efficiency, information about the first time, obtaining time corresponding to the first energy efficiency, periodic indication information corresponding to the first energy efficiency, or expected accuracy corresponding to the first energy efficiency.

The identifier information of the first object may indicate the first object that corresponds to the first energy efficiency and that the first access network device expects to obtain. It should be noted that the identifier information of the first object may also be described as the first identifier information.

For example, the identifier information of the first object may be one or more of the following: identifier information of a network slice, identifier information of a service, identifier information of a cell, identifier information of a station, identifier information of a TA, or identifier information of an RNA. This is not limited.

It should be noted that when the first request information does not include a bit corresponding to the identifier information of the first object, or the first request information includes a bit corresponding to the identifier information of the first object, but the bit is null, the first object may be considered as a station by default.

The type of the first energy efficiency may indicate a type of the first energy efficiency that the first access network device expects to obtain, and the type of the first energy efficiency may include the energy efficiency statistics information and/or the target energy efficiency information.

For example, 00 indicates that the type of the first energy efficiency is the energy efficiency statistics information, 01 indicates that the type of the first energy efficiency is the target energy efficiency information, and 10 indicates that the type of the first energy efficiency is the energy efficiency statistics information and the target energy efficiency information. The first access network device may carry 00 in the first request information, to indicate that the first access network device expects to obtain first energy efficiency whose type is the energy efficiency statistics information; carry 01 in the first request information, to indicate that the first access network device expects to obtain first energy efficiency whose type is the target energy efficiency information; or carry 10 in the first request information, to indicate that the first access network device expects to obtain first energy efficiency whose type is the energy efficiency statistics information and first energy efficiency whose type is the target energy efficiency information.

The information about the first time may indicate that the first access network device expects to obtain the first energy efficiency corresponding to the first time.

For example, the information about the first time may include the start time and/or the end time of the first time. For descriptions of the first time, refer to the descriptions of the first time in step 301. Details are not described again. The obtaining time corresponding to the first energy efficiency may indicate time at which the first access network device expects to obtain the first energy efficiency.

Optionally, if the second access network device cannot send the first energy efficiency to the first access network device within the time, the second access network device sends an error response to the first access network device, to indicate, to the first access network device, that the second access network device cannot send the first energy efficiency to the first access network device. The error response may also be referred to as a failure response.

The periodic indication information corresponding to the first energy efficiency may indicate the second access network device whether to periodically send the first energy efficiency to the first access network device.

For example, the first access network device uses one bit to indicate the periodic indication information. The first access network device may set the bit to 1, to indicate the second access network device to periodically feed back the first energy efficiency to the first access network device, or set the bit to 0, to indicate the second access network device not to periodically feed back the first energy efficiency to the first access network device.

Optionally, when the periodic indication information corresponding to the first energy efficiency indicates the second access network device to periodically send the first energy efficiency to the first access network device, the periodic indication information further includes periodicity time.

The periodicity time may be a time interval at which the second access network device periodically sends the first energy efficiency to the first access network device. Alternatively, the periodicity time may be a plurality of time points at which the second access network device periodically sends the first energy efficiency to the first access network device, or the like. This is not limited.

Further, the periodic indication information corresponding to the first energy efficiency may indicate the second access network device whether to periodically send first energy efficiency in different time periods to the first access network device.

For example, the periodic indication information corresponding to the first energy efficiency indicates the second access network device to periodically send, based on the periodicity time, first energy efficiency in last one hour to the first access network device. Assuming that the periodicity time is 20 minutes, the second access network device may send the first energy efficiency in the last one hour to the first access network device every 20 minutes. For example, current time is 15:00 on December 11, 2020, the second access network device may send first energy efficiency from 14:00 to 15:00 on December 11, 2020 to the first access network device at 15:00 on December 11, 2020, send first energy efficiency from 14:20 to 15:20 on December 11, 2020 to the first access network device at 15:20 on December 11, 2020, and send first energy efficiency from 14:40 to 15:40 on December 11, 2020 to the first access network device at 15:40 on December 11, 2020.

The expected accuracy corresponding to the first energy efficiency may indicate accuracy, for example, low or high, of the first energy efficiency that the first access network device expects to obtain.

Specifically, if the expected accuracy that corresponds to the first energy efficiency and that is indicated by the first access network device is high, the second access network device may perform an operation by using an ML model that can generate higher accuracy.

Optionally, when the energy consumption corresponding to the first object in the first access network device is less than a first threshold, the energy consumption is greater than a second threshold, or the second energy efficiency is less than a third threshold, the first access network device sends the first request information.

The first threshold, the second threshold, and the third threshold may be pre-specified in a communication protocol, may be pre-configured by a network control device, or may be customized by the first access network device. This is not limited.

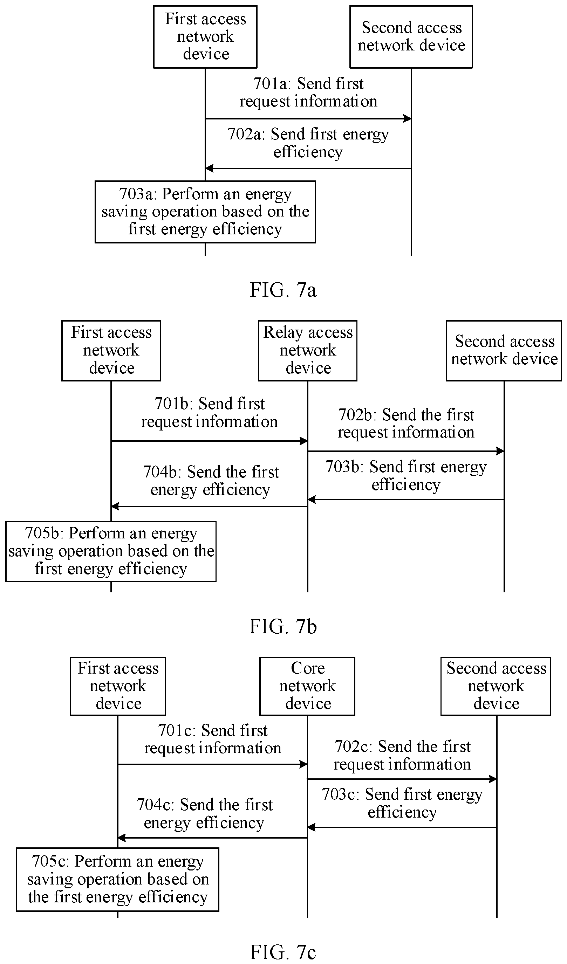

It should be noted that, based on step 301, when the first access network device and the second access network device can directly communicate with each other, as shown in FIG. 7a, the first access network device and the second access network device may perform the following steps shown in FIG. 7a.

FIG. 7a shows a communication method according to an embodiment of this application. The method may include the following steps.

Step 701a: A first access network device sends first request information to a second access network device. Specifically, for specific descriptions of step 701a, refer to step 301a. Details are not described again.

Step 702a: The second access network device sends first energy efficiency to the first access network device. Specifically, for specific descriptions of step 702a, refer to step 301. Details are not described again.

Step 703a: The first access network device performs an energy saving operation based on the first energy efficiency. Specifically, for specific descriptions of step 703a, refer to step 302. Details are not described again.

When the first access network device communicates with the second access network device via the relay access network device, as shown in FIG. 7b, the first access network device, the relay access network device, and the second access network device may perform the following steps shown in FIG. 7b.

FIG. 7b shows a communication method according to an embodiment of this application. The method may include the following steps.

Step 701b: A first access network device sends first request information to a relay access network device.

Step 702b: The relay access network device sends the first request information to a second access network device. Specifically, for specific descriptions of the first request information, refer to step 301a. Details are not described again.

Step 703b: The second access network device sends first energy efficiency to the relay access network device.

Step 704b: The relay access network device sends the first energy efficiency to the first access network device. Specifically, for specific descriptions of step 703b and step 704b, refer to step 301. Details are not described again.

Step 705b: The first access network device performs an energy saving operation based on the first energy efficiency. Specifically, for specific descriptions of step 705b, refer to step 302. Details are not described again.

When the first access network device communicates with the second access network device via the core network device, as shown in FIG. 7c, the first access network device, the core network device, and the second access network device may perform the following steps shown in FIG. 7c.

FIG. 7c shows a communication method according to an embodiment of this application. The method may include the following steps.

Step 701c: A first access network device sends first request information to a core network device.

Step 702c: The core network device sends the first request information to a second access network device. Specifically, for specific descriptions of the first request information, refer to step 301a. Details are not described again.

Step 703c: The second access network device sends first energy efficiency to the core network device.

Step 704c: The core network device sends the first energy efficiency to the first access network device.

Specifically, for specific descriptions of step 703c and step 704c, refer to step 301. Details are not described again. Step 705c: The first access network device performs an energy saving operation based on the first energy efficiency. Specifically, for specific descriptions of step 705c, refer to step 302. Details are not described again.

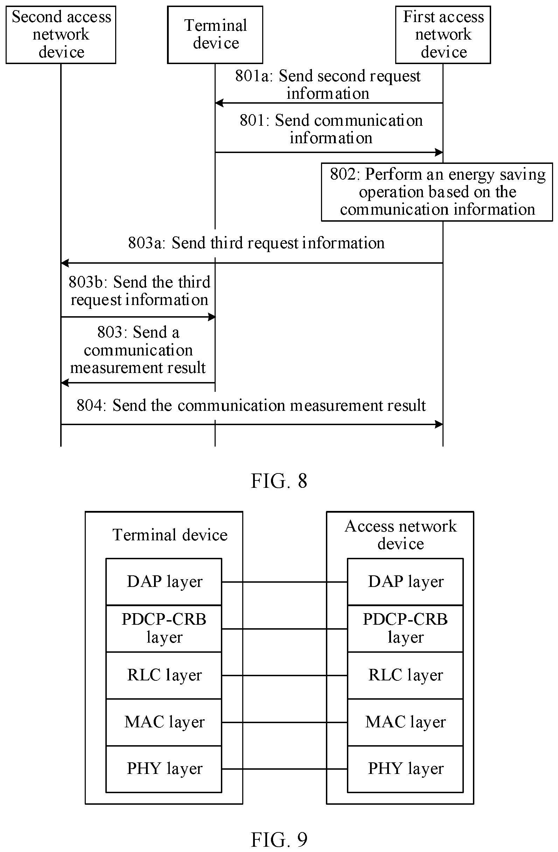

Corresponding to that the first access network device performs the energy saving operation based on the first energy efficiency shown in FIG. 3 to FIG. 7c, as shown in FIG. 8, the first access network device may alternatively perform the energy saving operation based on communication information of a terminal device.

FIG. 8 shows a communication method according to an embodiment of this application. As shown in FIG. 8, the method may include the following steps.

Step 801: A terminal device sends communication information to a first access network device.

The communication information indicates a communication feature of communication that is performed by the terminal device and that corresponds to a first object.

Specifically, for descriptions of the first object, refer to the descriptions of the first object in step 301. Details are not described again.

For example, the communication information includes one or more of the following: a communication time period, a data volume, a periodic communication indication, or a burst communication indication.

The communication time period indicates a time period in which the communication corresponding to the communication information occurs.

For example, the communication time period may include start time and duration. Alternatively, the communication time period may include start time and end time. Alternatively, the communication time period may include duration and end time. This is not limited.

The start time may indicate startup time of the occurred communication, the duration may indicate duration of the occurred communication, and the end time may indicate end time of the occurred communication.

The data volume may indicate an uplink data volume and/or a downlink data volume during the communication performed by the terminal device.

The periodic communication indication may indicate whether the communication corresponding to the communication information is periodic.

Further, if the communication is periodic, the periodic communication indication may further indicate at least one of a communication interval, an uplink data volume, or a downlink data volume of the periodic communication. For example, the communication interval of periodic communication may be in a time unit of one hour. This is not limited. The burst communication indication may indicate whether the communication corresponding to the communication information is bursty. If the communication is bursty, the burst communication indication may further indicate at least one of time of the burst communication, an uplink data volume of the burst communication, or a downlink data volume of the burst communication.

Optionally, when obtaining the communication information of the terminal device, the first access network device further obtains first identifier information corresponding to the communication information.

The first identifier information may indicate the first object. The first access network device may determine, based on the first identifier information, the first object corresponding to the communication information.

Specifically, for specific descriptions of the first identifier information and a correspondence between the first identifier information and the communication information, refer to the related descriptions of the first identifier information and a correspondence between the first identifier information and the first energy efficiency in step 301. Details are not described again.

Optionally, a type of the communication information includes communication statistics information and/or target communication information.

The communication statistics information may be a statistical result of communication information that has occurred. For example, the communication information may be communication information corresponding to the first object in the terminal device in last 10 hours.

The target communication information may be communication information obtained by predicting communication in a future time period, may be described as communication information obtained by estimating communication in a future time period, or may be described as communication information in a future time period.

For example, the communication information may be communication information obtained by predicting communication corresponding to the first object in the terminal device in future 10 hours.

For example, the terminal device may use current communication information as input of an ML model based on an AI/ML method, obtain output of the ML model, and determine the output of the ML model as the target communication information. For example, the terminal device pre-configures a trained ML model (for example, an Alex network AlexNet). The terminal device inputs the current communication information of the first object into the ML model, and the ML model may output future communication information of the first object as the target communication information.

Optionally, the target communication information further includes a confidence level.

The confidence level may indicate credibility of the target communication information. The confidence level represents prediction accuracy of the predicted communication information of the first object in the future time period. For example, the confidence level may be represented by a percentage. For example, the confidence level of the target communication information may be represented as 60%, 70%, or 85%. A higher confidence level indicates higher credibility of target communication information corresponding to the confidence level.

In another example, the confidence level may alternatively be high, medium, or low, to indicate the credibility of the corresponding target communication information. This is not limited.

Optionally, the communication information further includes third time and/or fourth time.

The third time may indicate time corresponding to the communication information, and the third time may also be referred to as analysis target time. The fourth time may indicate time at which the terminal device generates the communication information.

For example, the third time may include start time and/or end time.

For example, current time is 16:00 on December 11, 2020. Assuming that the start time corresponding to the third time is 08:00 on December 11, 2020, and the end time is 12:00 on December 11, 2020, it indicates that the communication information is communication statistics information from 08:00 to 12:00 on December 11, 2020. For another example, current time is 16:00 on December 11, 2020. Assuming that the start time corresponding to the third time is 17:00 on December 11, 2020, and the end time is 18:00 on December 11, 2020, it indicates that the communication information is target communication information from 17:00 to 18:00 on December 11, 2020.

For example, the fourth time may be a timestamp.

For example, the fourth time is 16:00 on December 11, 2020. It indicates that the communication information is generated by the terminal device at 16:00 on December 11, 2020.

Optionally, after receiving the communication information, the first access network device determines, based on the fourth time included in the communication information, whether to use the communication information.

For example, the first access network device obtains, before 16:00 on December 11, 2020, communication information 1 and communication information 2 that correspond to the terminal device. Assuming that third time corresponding to the communication information 1 and third time corresponding to the communication information 2 are both 17:00 to 18:00 on December 11, 2020, the first access network device may determine, based on the third time, that both the communication information 1 and the communication information 2 are the target communication information. Assuming that fourth time corresponding to the communication information 1 is 15:00 on December 11, 2020, and fourth time corresponding to the communication information 2 is 15:50 on December 11, 2020, because in comparison with the communication information 1, the communication information 2 is newly generated by the terminal device, and accuracy is higher, the first access network device may determine, from the communication information 1 and the communication information 2 that are obtained, to use the communication information 2, so that accuracy of the communication information is improved.

It should be noted that when the first access network device can directly communicate with the terminal device, the first access network device may receive the communication information sent by the terminal device.

For example, the first access network device is a base station, a CU, or a CU-CP. The terminal device may directly send the communication information to the first access network device.

Alternatively, when the terminal device communicates with the first access network device via a relay access network device, the terminal device sends the communication information of the terminal device to the first access network device via the relay access network device.

The relay access network device may be an access network device that may simultaneously communicate with the first access network device and the terminal device in the communication system shown in FIG. 1a or FIG. 1b.

For example, the first access network device is a DU or a CU-UP. The terminal device may send the communication information to a CU or a CU-CP (namely, the relay access network device) connected to the first access network device, and the CU or the CU-CP sends the communication information to the first access network device through an F1 interface or an El interface.

Optionally, related information is sent between the terminal device and the access network device based on an existing protocol stack.

For example, the related information is carried in an RRC message.

Alternatively, the terminal device and the access network device send the related information based on a new protocol stack.

For example, the related information may be sent between the terminal device and the access network device by using a dedicated protocol (for example, a data analytics protocol (data analytics protocol, DAP)), to implement a function such as segmentation, sorting, integrity protection, or encryption or decryption of the related information.

For example, the related information may be sent between the terminal device and the access network device by using a protocol stack shown in FIG. 9. The protocol stack may include a DAP layer, a PDCP layer, an RLC layer, a MAC layer, and a PHY layer. The PDCP layer is associated with a dedicated radio bearer (for example, a computing radio bearer (computing radio bearer, CRB)), to implement orderly sending, encryption or decryption, repetition detection, or the like of the related information. The DAP layer, the PDCP layer, the RLC layer, the MAC layer, and the PHY layer all belong to an access stratum (access stratum, AS) layer.

The CRB and a function of the CRB are described below.

The PDCP may establish a radio bearer, namely, the CRB, that is for transmitting calculation data. It may be understood that the CRB is merely an example name, and a name of the radio bearer is not specifically limited. A size of a packet transmitted by the CRB, a quality of service (quality of service, QoS) level, or the like is applicable to the calculation data.

For example, the CRB may use a logical channel identifier (logical channel identifier, LCID) different from that of an SRB/a DRB. For example, the CRB may use a reserved (reserved) LCID value on a downlink-shared channel (downlink-shared channel, DL-SCH)/an uplink downlink-shared channel (uplink-shared channel, UL-SCH) in the 3GPP standard.

A QoS characteristic of the CRB may also be different from that of the SRB/DRB. For example, the QoS level of the CRB may be lower than that of the SRB/DRB. For another example, the SRB has no packet delay budget (packet delay budget, PDB), but the CRB may have a PDB, and so on.

The CRB and the SRB/DRB transmit different information. For example, information carried by the SRB is signaling, the DRB carries user application layer data from a terminal device and a data network, and the CRB carries calculation data in a wireless network, for example, data associated with an ML task. For another example, a data volume of the information carried by the SRB is small, but the CRB may not be limited to a data volume. For still another example, when the SRB transmits the information, charging of a terminal device is involved, but when the CRB transmits the information, charging of a terminal device may not be involved.

In addition, if data transmitted by the CRB is calculation data of an access network device, data transmission of the CRB may be terminated by the access network device, that is, the calculation data transmitted by the CRB may not be transmitted back to a core network device. In comparison with transmitting the calculation data by using the DRB, a transmission path is shorter when the calculation data is transmitted by using the CRB, so that a transmission delay can be reduced. In addition, when the calculation data is transmitted by using the CRB, charging of a terminal device is not affected.

For example, the PDCP layer may include a sublayer that is for implementing a function such as data transmission of the calculation data, encryption or decryption of the calculation data, or repetition detection. For ease of description, the sublayer that supports the function such as the data transmission of the calculation data, the encryption or the decryption of the calculation data, or the repetition detection and that is at the PDCP layer may be referred to as a "PDCP-CRB" sublayer.

Step 802: The first access network device performs an energy saving operation based on the communication information.

Specifically, for specific descriptions of the energy saving operation, refer to the specific descriptions of the energy saving operation in step 302. Details are not described again.

Optionally, the first access network device hands over the terminal device to the second access network device based on the foregoing energy saving operation.

For example, the first access network device may determine, based on the communication information sent by the terminal device, whether to hand over the terminal device to the second access network device.

After the first access network device hands over the terminal device to the second access network device, the first access network device does not have a service related to the terminal device. Therefore, the first access network device does not need to allocate a resource to the terminal device, and turns off a power amplifier, a power amplifier of a cell radio frequency channel, or a power amplifier of a cell carrier in a symbol periodicity related to the terminal device, so that energy consumption of the first access network device is reduced.

Optionally, when the communication information obtained by the first access network device is the communication statistics information, the first access network device may use the current communication statistics information as input of an ML model based on an AI/ML method, and determine output of the ML model as the target communication information. For example, the first access network device pre-configures a trained ML model (for example, an Alex network AlexNet). The first access network device inputs the current communication statistics information of the first object into the ML model, and the ML model may output future communication information of the first object as the target communication information.

Further, the first access network device may alternatively perform the energy saving operation based on the communication information and information such as cell coverage quality or target cell load, to reduce overall energy consumption of a communication system.

Based on the method shown in FIG. 8, the first access network device performs the energy saving operation based on the obtained communication information of the terminal device, so that the overall energy consumption of the communication system can be effectively reduced on a basis that performance of the terminal device is ensured. Further, based on the method shown in FIG. 8, before the terminal device sends the communication information to the first access network device, the first access network device may further perform the following step 801a.

Step 801a: The first access network device sends second request information to the terminal device.

The second request information may be for requesting the communication information corresponding to the terminal device.

For example, the second request information may include one or more of the following: the identifier information of the first object, the type of the communication information, information about the third time, obtaining time corresponding to the communication information, periodic indication information corresponding to the communication information, or expected accuracy corresponding to the communication information.

The identifier information of the first object may indicate the first object that corresponds to the communication information and that the first access network device expects to obtain. It should be noted that the identifier information of the first object may also be described as the first identifier information.

For example, the identifier information of the first object may be one or more of the following: identifier information of a network slice, identifier information of a service, identifier information of a cell, identifier information of a station, identifier information of a TA, or identifier information of an RNA. This is not limited.

It should be noted that when the second request information does not include a bit corresponding to the identifier information of the first object, or the second request information includes a bit corresponding to the identifier information of the first object, but the bit is null, it may be considered by default that the second request information is for requesting a sum of communication information of all first objects.

The type of the communication information may indicate a type of the communication information that the first access network device expects to obtain, and the type of the communication information may include the communication statistics information and/or the target communication information.

For example, 00 indicates that the type of the communication information is the communication statistics information, 01 indicates that the type of the communication information is the target communication information, and 10 indicates that the type of the communication information is the communication statistics information and the target communication information. The first access network device may carry 00 in the second request information, to indicate that the first access network device expects to obtain communication information whose type is the communication statistics information; carry 01 in the second request information, to indicate that the first access network device expects to obtain communication information whose type is the target communication information; or carry 10 in the second request information, to indicate that the first access network device expects to obtain communication information whose type is the communication statistics information and communication information whose type is the target communication information.

The information about the third time may indicate that the first access network device expects to obtain the communication information corresponding to the third time.

For example, the information about the third time may include the start time and/or the end time of the third time. For descriptions of the third time, refer to the descriptions of the third time in step 801. Details are not described again. The obtaining time corresponding to the communication information may indicate time at which the first access network device expects to obtain the communication information.

Optionally, if the terminal device cannot send the communication information to the first access network device within the time, the terminal device sends an error response to the first access network device, to indicate, to the first access network device, that the terminal device cannot send the communication information to the first access network device. The error response may also be referred to as a failure response.

The periodic indication information corresponding to the communication information may indicate the terminal device whether to periodically send the communication information to the first access network device.

For example, the first access network device uses one bit to indicate the periodic indication information. The first access network device may set the bit to 1, to indicate the terminal device to periodically feed back the communication information to the first access network device, or set the bit to 0, to indicate the terminal device not to periodically feed back the communication information to the first access network device.

Optionally, when the periodic indication information corresponding to the communication information indicates the terminal device to periodically send the communication information to the first access network device, the periodic indication information further includes periodicity time.

The periodicity time may be a time interval at which the terminal device periodically sends the communication information to the first access network device. Alternatively, the periodicity time may be a plurality of time points at which the terminal device periodically sends the communication information to the first access network device, or the like. This is not limited.

Further, the periodic indication information corresponding to the communication information may indicate the terminal device whether to periodically send communication information in different time periods to the first access network device.

For example, the periodic indication information corresponding to the communication information indicates the terminal device to periodically send, based on the periodicity time, communication information in last one hour to the first access network device. Assuming that the periodicity time is 20 minutes, the terminal device may send the communication information in the last one hour to the first access network device every 20 minutes. For example, current time is 15:00 on December 11, 2020, the terminal device may send communication information from 14:00 to 15:00 on December 11, 2020 to the first access network device at 15:00 on December 11, 2020, send communication information from 14:20 to 15:20 on December 11, 2020 to the first access network device at 15:20 on December 11, 2020, and send communication information from 14:40 to 15:40 on December 11, 2020 to the first access network device at 15:40 on December 11, 2020.

The expected accuracy corresponding to the communication information may indicate accuracy, for example, low or high, of the communication information that the first access network device expects to obtain.

Specifically, if the expected accuracy that corresponds to the communication information and that is indicated by the first access network device is high, the terminal device may perform an operation by using an ML model that can generate higher accuracy.

It should be noted that, based on step 801, when the first access network device and the terminal device can directly communicate with each other, the first access network device may send the second request information to the terminal device by using step 801a, receive the communication information sent by the terminal device, and perform the energy saving operation based on the communication information. When the first access network device communicates with the terminal device via the relay access network device, the first access network device may send the second request information to the relay access network device, and the relay access network device sends the second request information to the terminal device. When receiving the second request information, the terminal device may send the communication information to the relay access network device, and the relay access network device sends the communication information to the first access network device. The first access network device performs the energy saving operation based on the communication information.

Based on the method shown in FIG. 8, after the first access network device hands over the terminal device to the second access network device, as shown in FIG. 8, the first access network device, the second access network device, and the terminal device may further perform the following step 803 and step 804.

Step 803: The terminal device sends a communication measurement result to the second access network device. The communication measurement result may indicate a communication feature that corresponds to the terminal device after the terminal device accesses the second access network device.

For example, the communication measurement result may be communication statistics information that corresponds to the terminal device after the terminal device accesses the second access network device. For descriptions of the communication statistics information, refer to the related descriptions of the communication statistics information in step 801. Details are not described again.

Step 804: The second access network device sends the communication measurement result to the first access network device.

After receiving the communication measurement result corresponding to the terminal device, the first access network device may compare the communication information that corresponds to the terminal device in the first access network device with the communication measurement result, and adjust, based on a comparison result, a policy corresponding to the communication information when the first access network device hands over the terminal device to the second access network device based on the communication information. For example, the policy may be a weight corresponding to communication information.

For example, the first access network device determines, based on the communication information of the terminal device, the cell coverage quality, and the target cell load, whether to hand over the terminal device to the second access network device. After the first access network device receives the communication measurement result corresponding to the terminal device, if a difference between the communication information that corresponds to the terminal device in the first access network device and the communication measurement result is greater than a threshold, when the first access network device subsequently determines, based on the communication information of the terminal device, the cell coverage quality, and the target cell load, whether to hand over the terminal device to the second access network device, the first access network device may reduce the weight corresponding to communication information, or reversely, improve the weight corresponding to communication information.

Based on step 803, after the terminal device is handed over to the second access network device, and before the terminal device sends the communication measurement result to the second access network device, the first access network device may further perform the following step 803a.

Step 803a: The first access network device sends third request information to the second access network device. The third request information is for requesting the communication measurement result of the terminal device. Specifically, after receiving the third request information, the terminal device sends the communication measurement result to the second access network device based on the third request information.

Based on step 803a, after the terminal device is handed over to the second access network device, and before the terminal device sends the communication measurement result to the second access network device, the first access network device and the second access network device may further perform the following step 803b.

Step 803b: The second access network device sends the third request information to the terminal device.

Based on the method shown in FIG. 8, the first access network device compares the communication information of the terminal device with the communication measurement result of the terminal device, and adjusts the energy saving operation based on the comparison result, so that the overall energy consumption of the communication system can be reduced on the basis that the performance of the terminal device is ensured.

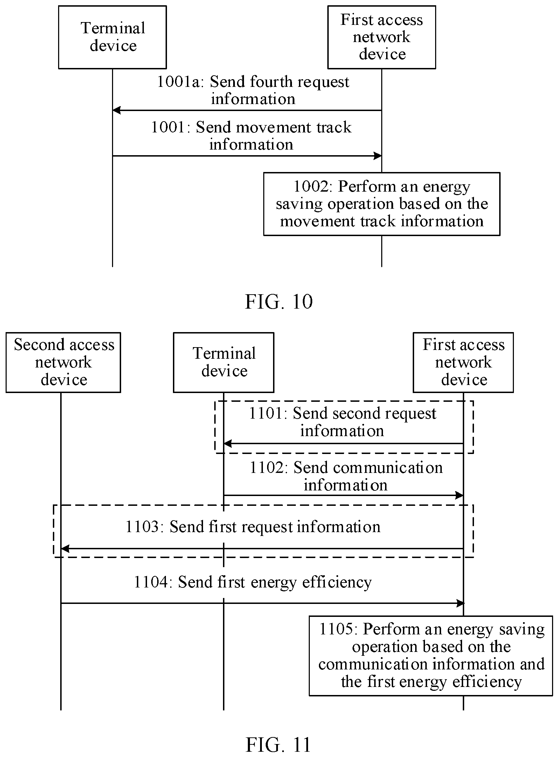

Corresponding to the communication methods in FIG. 3 to FIG. 8, the first access network device may alternatively perform the energy saving operation based on track information of a terminal device by using a method shown in FIG. 10.

FIG. 10 shows a communication method according to an embodiment of this application. As shown in FIG. 10, the method may include the following steps.

Step 1001: A terminal device sends movement track information of the terminal device to a first access network device. For example, the movement track information may include one or more of the following: a location, a direction, a speed, or an acceleration.

The location may indicate information about a location of the terminal device.

For example, the location may be a specific physical location. For example, the location may be a longitude and latitude of the terminal device, and the longitude and latitude of the terminal device may be obtained by using a satellite navigation system. Alternatively, the location may be a cell visited by the terminal device. The cell visited by the terminal device may be a cell accessed by the terminal device in an RRC connected mode (RRC_CONNECTED), and/or a cell selected by the terminal device through cell reselection in an RRC idle mode (RRC_IDLE) and/or an RRC inactive mode (RRC INACTIVE). The cell may be uniquely identified by using an NCGI, or may be uniquely identified by using a physical cell identifier (physical cell identifier, PCI) and a carrier frequency.

Optionally, the location further includes camping duration of the terminal device at the location represented by the specific longitude and latitude, or camping duration of the terminal device in the cell.

The direction may indicate a movement direction of the terminal device. For example, the direction indicates an angle of the terminal device relative to a horizontal direction, and/or indicates an angle of the terminal device relative to a vertical direction.

The speed may indicate a moving speed of the terminal device. For example, the speed may be 40 km/h.

Optionally, a type of the movement track information includes movement track statistics information and/or target movement track information.

The movement track statistics information may be a statistics result of a movement track that has occurred on the terminal device.

For example, the movement track information may be a movement track corresponding to the terminal device in last 10 hours.

The target movement track information may be a movement track result obtained by predicting a movement track of the terminal device in a future time period, may be described as a movement track result obtained by estimating a movement track of the terminal device in a future time period, or may be described as a movement track result in a future time period.

For example, the target movement track information may be a movement track result obtained by predicting a movement track of the terminal device in future 10 hours.

For example, the terminal device may use a current movement track as input of an ML model based on an AI/ML method, obtain output of the ML model, and determine the output of the ML model as the target movement track information. For example, the terminal device pre-configures a trained ML model (for example, an Alex network AlexNet). The terminal device inputs the current movement track into the ML model, and the ML model may output a future movement track result as the target movement track information.

Optionally, the target movement track information further includes a confidence level.

The confidence level may indicate credibility of the target movement track information. The confidence level represents prediction accuracy of the predicted movement track information in the future time period.

For example, the confidence level may be represented by a percentage. For example, the confidence level of the target movement track information may be represented as 60%, 70%, or 85%. A higher confidence level indicates higher credibility of target movement track information corresponding to the confidence level.

In another example, the confidence level may alternatively be high, medium, or low, to indicate the credibility of the corresponding target movement track information. This is not limited.

Optionally, the movement track information further includes fifth time and/or sixth time.

The fifth time may indicate time corresponding to the movement track information, and the fifth time may also be referred to as analysis target time. The sixth time may indicate time at which the terminal device generates the movement track information.

For example, the fifth time may include start time and/or end time.

For example, current time is 16:00 on December 11, 2020. Assuming that the start time corresponding to the fifth time is 08:00 on December 11, 2020, and the end time is 12:00 on December 11, 2020, it indicates that the movement track information is movement track statistics information from 08:00 to 12:00 on December 11, 2020.

For another example, current time is 16:00 on December 11, 2020. Assuming that the start time corresponding to the fifth time is 17:00 on December 11, 2020, and the end time is 18:00 on December 11, 2020, it indicates that the movement track information is target movement track information from 17:00 to 18:00 on December 11, 2020.

For example, the sixth time may be a timestamp.

For example, the sixth time is 16:00 on December 11, 2020. It indicates that the movement track information is generated by the terminal device at 16:00 on December 11, 2020.

Optionally, after receiving the movement track information, the first access network device determines, based on the sixth time included in the movement track information, whether to use the movement track information.

For example, the first access network device obtains, before 16:00 on December 11, 2020, movement track information 1 and movement track information 2 that correspond to the terminal device. Assuming that fifth time corresponding to the movement track information 1 and fifth time corresponding to the movement track information 2 are both 17:00 to 18:00 on December 11, 2020, the first access network device may determine, based on the fifth time, that both the movement track information 1 and the movement track information 2 are the target movement track information. Assuming that sixth time corresponding to the movement track information 1 is 15:00 on December 11, 2020, and sixth time corresponding to the movement track information 2 is 15:50 on December 11, 2020, because in comparison with the movement track information 1, the movement track information 2 is newly generated by the terminal device, and accuracy is higher, the first access network device may determine, from the movement track information 1 and the movement track information 2 that are obtained, to use the movement track information 2, so that accuracy of the movement track information is improved.

It should be noted that when the first access network device can directly communicate with the terminal device, the first access network device may receive the movement track information sent by the terminal device.

For example, the first access network device is a base station, a CU, or a CU-CP. The terminal device may directly send the movement track information to the first access network device.

Alternatively, when the terminal device needs to communicate with the first access network device via a relay access network device, the first access network device receives the movement track information of the terminal device that is sent by the relay access network device.

The relay access network device may be an access network device that may simultaneously communicate with the first access network device and the terminal device in the communication system shown in FIG. 1a or FIG. 1b.

For example, the first access network device is a DU or a CU-UP. The terminal device may send the movement track information to a CU or a CU-CP (namely, the relay access network device) connected to the first access network device, and the CU or the CU-CP sends the movement track information to the first access network device through an F1 interface or an E1 interface.

Step 1002: The first access network device performs an energy saving operation based on the movement track information.

Specifically, for specific descriptions of the energy saving operation, refer to the specific descriptions of the energy saving operation in step 302. Details are not described again.

Optionally, the first access network device hands over the terminal device to the second access network device based on the foregoing energy saving operation.

For example, the first access network device may determine, based on the movement track information sent by the terminal device, whether to hand over the terminal device to the second access network device.

After the first access network device hands over the terminal device to the second access network device, the first access network device does not have a service related to the terminal device. Therefore, the first access network device does not need to allocate a resource to the terminal device, and turns off a power amplifier, a power amplifier of a cell radio frequency channel, or a power amplifier of a cell carrier in a symbol periodicity related to the terminal device, so that energy consumption of the first access network device is reduced.

Optionally, when the movement track information obtained by the first access network device is the movement track statistics information, the first access network device may use the current movement track statistics information as input of an ML model based on an AI/ML method, and determine output of the ML model as the target movement track information. For example, the first access network device pre-configures a trained ML model (for example, an Alex network AlexNet). The first access network device inputs the current movement track statistics information of the terminal device into the ML model, and the ML model may output future movement track information of the terminal device as the target movement track information.

Further, the first access network device may alternatively perform the energy saving operation based on the movement track information and information such as cell coverage quality or target cell load, to reduce overall energy consumption of a communication system.

Based on the method shown in FIG. 10, the first access network device performs the energy saving operation based on the obtained movement track information of the terminal device, so that the overall energy consumption of the communication system can be effectively reduced on a basis that performance of the terminal device is ensured. Further, based on the method shown in FIG. 10, before the terminal device sends the movement track information to the first access network device, the first access network device may further perform the following step 1001a.

Step 1001a: The first access network device sends fourth request information to the terminal device.

The fourth request information may be for requesting the movement track information corresponding to the terminal device.

For example, the fourth request information may include one or more of the following: the location, the direction, the speed, the acceleration, the type of the movement track information, information about the fifth time, obtaining time corresponding to the movement track information, periodic indication information corresponding to the movement track information, or expected accuracy corresponding to the movement track information.

The location may indicate a location that is of the terminal device, that corresponds to the movement track information, and that the first access network device expects to obtain. The direction may indicate a direction that is of the terminal device, that corresponds to the movement track information, and that the first access network device expects to obtain. The speed may indicate a speed that is of the terminal device, that corresponds to the movement track information, and that the first access network device expects to obtain. The acceleration may indicate an acceleration that is of the terminal device, that corresponds to the movement track information, and that the first access network device expects to obtain.

It should be noted that when the fourth request information does not include a bit of the location, the direction, the speed, and/or the acceleration, or the fourth request information includes a bit corresponding to the location, the direction, the speed, and/or the acceleration, but the bit is null, it may be considered by default that the fourth request information is for requesting a location of the terminal device corresponding to the movement track information. The type of the movement track information may indicate a type of the movement track information that the first access network device expects to obtain, and the type of the movement track information may include the movement track statistics information and/or the target movement track information.

For example, 00 indicates that the type of the movement track information is the movement track statistics information, 01 indicates that the type of the movement track information is the target movement track information, and 10 indicates that the type of the movement track information is the movement track statistics information and the target movement track information. The first access network device may carry 00 in the fourth request information, to indicate that the first access network device expects to obtain movement track information whose type is the movement track statistics information; carry 01 in the fourth request information, to indicate that the first access network device expects to obtain movement track information whose type is the target movement track information; or carry 10 in the fourth request information, to indicate that the first access network device expects to obtain movement track information whose type is the movement track statistics information and movement track information whose type is the target movement track information.

The information about the fifth time may indicate that the first access network device expects to obtain the movement track information corresponding to the fifth time.

For example, the information about the fifth time may include the start time and/or the end time of the fifth time. For descriptions of the fifth time, refer to the descriptions of the fifth time in step 1001. Details are not described again. The obtaining time corresponding to the movement track information may indicate time at which the first access network device expects to obtain the movement track information.

Optionally, if the terminal device cannot send the movement track information to the first access network device within the time, the terminal device sends an error response to the first access network device, to indicate, to the first access network device, that the terminal device cannot send the movement track information to the first access network device. The error response may also be referred to as a failure response.

The periodic indication information corresponding to the movement track information may indicate the terminal device whether to periodically send the movement track information to the first access network device.

For example, the first access network device uses one bit to indicate the periodic indication information. The first access network device may set the bit to 1, to indicate the terminal device to periodically feed back the movement track information to the first access network device, or set the bit to 0, to indicate the terminal device not to periodically feed back the movement track information to the first access network device.

Optionally, when the periodic indication information corresponding to the movement track information indicates the terminal device to periodically send the movement track information to the first access network device, the periodic indication information further includes periodicity time.

The periodicity time may be a time interval at which the terminal device periodically sends the movement track information to the first access network device. Alternatively, the periodicity time may be a plurality of time points at which the terminal device periodically sends the movement track information to the first access network device, or the like. This is not limited.

Further, the periodic indication information corresponding to the movement track information may indicate the terminal device whether to periodically send movement track information in different time periods to the first access network device.

For example, the periodic indication information corresponding to the movement track information indicates the terminal device to periodically send, based on the periodicity time, movement track information in last one hour to the first access network device. Assuming that the periodicity time is 20 minutes, the terminal device may send the movement track information in the last one hour to the first access network device every 20 minutes. For example, current time is 15:00 on December 11, 2020, the terminal device may send movement track information from 14:00 to 15:00 on December 11, 2020 to the first access network device at 15:00 on December 11, 2020, send movement track information from 14:20 to 15:20 on December 11, 2020 to the first access network device at 15:20 on December 11, 2020, and send movement track information from 14:40 to 15:40 on December 11, 2020 to the first access network device at 15:40 on December 11, 2020.

The expected accuracy corresponding to the movement track information may indicate accuracy, for example, low or high, of the movement track information that the first access network device expects to obtain.

Specifically, if the expected accuracy that corresponds to the movement track information and that is indicated by the first access network device is high, the terminal device may perform an operation by using an ML model that can generate higher accuracy.

It should be noted that, based on step 1001, when the first access network device and the terminal device can directly communicate with each other, the first access network device may perform step 1001a to send the fourth request information to the terminal device, receive the movement track information sent by the terminal device, and perform the energy saving operation based on the movement track information. When the first access network device communicates with the terminal device via the relay access network device, the first access network device may send the fourth request information to the relay access network device, and the relay access network device sends the fourth request information to the terminal device. When receiving the fourth request information, the terminal device may send the movement track information to the relay access network device, and the relay access network device sends the movement track information to the first access network device. The first access network device performs the energy saving operation based on the movement track information.

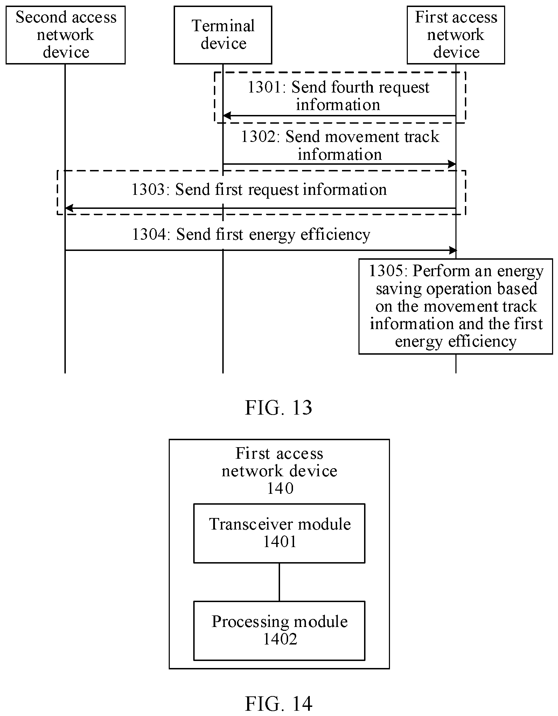

Based on the communication methods shown in FIG. 3 to FIG. 10, the first access network device may perform the energy saving operation based on the first energy efficiency by using the method shown in FIG. 3, or may perform the energy saving operation based on the communication information by using the method shown in FIG. 8, or may perform the energy saving operation based on the movement track information by using the method shown in FIG. 10. Further, the first access network device may alternatively perform the energy saving operation based on the first energy efficiency and the communication information by using a method shown in FIG. 11, or perform the energy saving operation based on the first energy efficiency and the movement track information by using a method shown in FIG. 13.

FIG. 11 shows a communication method according to an embodiment of this application. As shown in FIG. 11, the method may include the following steps.

Step 1101: A first access network device sends second request information to a terminal device.

For descriptions of step 1101, refer to step 801a. Details are not described again.

It should be noted that this step is an optional step.

Step 1102: The terminal device sends communication information to the first access network device.

For descriptions of step 1102, refer to step 801. Details are not described again.

Step 1103: The first access network device sends first request information to a second access network device.

For descriptions of step 1103, refer to step 301a. Details are not described again.

It should be noted that this step is an optional step.

Step 1104: The second access network device sends first energy efficiency to the first access network device.

For descriptions of step 1104, refer to step 301. Details are not described again.

It should be noted that a sequence of executing step 1101 and step 1102 and executing step 1103 and step 1104 is not limited. To be specific, step 1101 and step 1102 may be performed first, or step 1103 and step 1104 may be performed first. Alternatively, step 1101 and step 1102 and step 1103 and step 1104 may be simultaneously performed. This is not limited.

Step 1105: The first access network device performs an energy saving operation based on the communication information and the first energy efficiency.

Specifically, for specific descriptions of the energy saving operation, refer to the specific descriptions of the energy saving operation in step 302. Details are not described again.

Optionally, the first access network device hands over the terminal device to the second access network device based on the foregoing energy saving operation.

For example, the first access network device may determine, based on the communication information sent by the terminal device and the first energy efficiency sent by the second access network device, whether energy efficiency during communication performed by the second access network device when the second access network device carries the terminal device is greater than or equal to energy efficiency during communication performed by the first access network device when the first access network device carries the terminal device. If yes, the first access network device hands over the terminal device to the second access network device.

After the first access network device hands over the terminal device to the second access network device, the first access network device does not have a service related to the terminal device. Therefore, the first access network device does not need to allocate a resource to the terminal device, and turns off a power amplifier, a power amplifier of a cell radio frequency channel, or a power amplifier of a cell carrier in a symbol periodicity related to the terminal device, so that energy consumption of the first access network device is reduced.

Optionally, when the communication information obtained by the first access network device is the communication statistics information, the first access network device may use the current communication statistics information as input of an ML model based on an AI/ML method, and determine output of the ML model as the target communication information.

Further, the first access network device may alternatively perform the energy saving operation based on the communication information, the first energy efficiency, and information such as cell coverage quality or target cell load, to reduce overall energy consumption of a communication system.

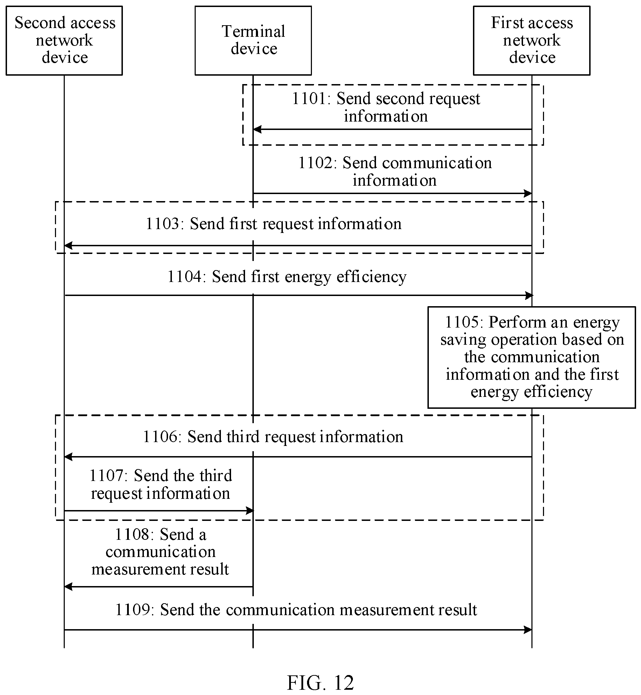

Based on the method shown in FIG. 11, as shown in FIG. 12, after performing the energy saving operation based on the communication information and the first energy efficiency, the first access network device may further perform the following step 1106 to step 1109, to adjust the energy saving operation based on a received communication measurement result of the terminal device.

Step 1106: The first access network device sends third request information to the second access network device.

For descriptions of step 1106, refer to step 803a. Details are not described again.

It should be noted that this step is an optional step.

Step 1107: The second access network device sends the third request information to the terminal device.

For descriptions of step 1107, refer to step 803b. Details are not described again.

It should be noted that this step is an optional step.

Step 1108: The terminal device sends a communication measurement result to the second access network device. For descriptions of step 1108, refer to step 803. Details are not described again.

Step 1109: The second access network device sends the communication measurement result to the first access network device.

After receiving the communication measurement result corresponding to the terminal device, the first access network device may compare the communication information that corresponds to the terminal device in the first access network device with the communication measurement result, and adjust, based on a comparison result, a weight corresponding to the communication information when the first access network device hands over the terminal device to the second access network device based on the communication information and the first energy efficiency.

For example, the first access network device determines, based on the communication information of the terminal device, the first energy efficiency, the cell coverage quality, and the target cell load, whether to hand over the terminal device to the second access network device. After the first access network device receives the communication measurement result corresponding to the terminal device, if a difference between the communication information that corresponds to the terminal device in the first access network device and the communication measurement result is greater than a threshold, when the first access network device subsequently determines, based on the communication information of the terminal device, the first energy efficiency, the cell coverage quality, and the target cell load, whether to hand over the terminal device to the second access network device, the first access network device may reduce the weight corresponding to communication information, or reversely, improve the weight corresponding to communication information.

FIG. 13 shows a communication method according to an embodiment of this application. As shown in FIG. 13, the method may include the following steps.

Step 1301: A first access network device sends fourth request information to a terminal device.

For descriptions of step 1301, refer to step 1001a. Details are not described again.

It should be noted that this step is an optional step.

Step 1302: The terminal device sends movement track information to the first access network device.

For descriptions of step 1302, refer to step 1001. Details are not described again.

Step 1303: The first access network device sends first request information to a second access network device.

For descriptions of step 1303, refer to step 301a. Details are not described again.

It should be noted that this step is an optional step.

Step 1304: The second access network device sends first energy efficiency to the first access network device.

For descriptions of step 1304, refer to step 301. Details are not described again.

It should be noted that a sequence of executing step 1301 and step 1302 and executing step 1303 and step 1304 is not limited. To be specific, step 1301 and step 1302 may be performed first, or step 1303 and step 1304 may be performed first. Alternatively, step 1301 and step 1302 and step 1303 and step 1304 may be simultaneously performed. This is not limited.

Step 1305: The first access network device performs an energy saving operation based on the movement track information and the first energy efficiency.

Specifically, for specific descriptions of the energy saving operation, refer to the specific descriptions of the energy saving operation in step 302. Details are not described again.

Optionally, the first access network device hands over the terminal device to the second access network device based on the foregoing energy saving operation.

For example, the first access network device may determine, based on the movement track information sent by the terminal device and the first energy efficiency sent by the second access network device, that the first access network device may hand over the terminal device to the second access network device when the terminal device is to move to a cell in the second access network device.

It should be noted that if the first access network device determines, based on the first energy efficiency sent by the second access network device and third energy efficiency sent by a third access network device, that energy efficiency when the third access network device carries the terminal device is slightly greater than energy efficiency when the second access network device carries the terminal device, but the first access network device determines, based on the movement track information sent by the terminal device, that the terminal device is to move to a cell in the second access network device, the first access network device may hand over the terminal device to the second access network device, to avoid network energy consumption caused by frequent handover on the terminal device, so that performance of the terminal device is ensured.

For descriptions of the third energy efficiency, refer to the foregoing descriptions of the first energy efficiency and the second energy efficiency. Details are not described again.

After the first access network device hands over the terminal device to the second access network device, the first access network device does not have a service related to the terminal device. Therefore, the first access network device does not need to allocate a resource to the terminal device, and turns off a power amplifier, a power amplifier of a cell radio frequency channel, or a power amplifier of a cell carrier in a symbol periodicity related to the terminal device, so that energy consumption of the first access network device is reduced.

Optionally, when the movement track information obtained by the first access network device is the movement track statistics information, the first access network device may use the current movement track statistics information as input of an ML model based on an AI/ML method, and determine output of the ML model as the target movement track information.

Further, the first access network device may alternatively perform the energy saving operation based on the movement track information, the first energy efficiency, and information such as cell coverage quality or target cell load, to reduce overall energy consumption of a communication system.

It should be noted that FIG. 11 to FIG. 12 are described merely by using an example in which the first access network device can directly communicate with the terminal device and the first access network device can directly communicate with the second access network device. When the first access network device communicates with the second access network device or the terminal device via a relay access network device, for a specific communication process, refer to the related descriptions in FIG. 3 to FIG. 10. Details are not described again.

The foregoing mainly describes the solutions provided in embodiments of this application from a perspective of interaction between the devices. It may be understood that to implement the foregoing functions, the devices include hardware structures and/or software modules corresponding to the functions. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division according to the foregoing method example. For example, the functional modules may be obtained through division corresponding to various functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 14 shows a first access network device. The first access network device 140 may include a transceiver module 1401 and a processing module 1402. For example, the first access network device 140 may be a first access network device, or may be a chip used in the first access network device or another combined device or component that has a function of the first access network device. When the first access network device 140 is the first access network device, the transceiver module 1401 may be a transceiver, the transceiver may include an antenna, a radio frequency circuit, and the like, and the processing module 1402 may be a processor (or a processing circuit), for example, a baseband processor. The baseband processor may include one or more CPUs. When the first access network device 140 is a component having the function of the first access network device, the transceiver module 1401 may be a radio frequency unit, and the processing module 1402 may be a processor (or a processing circuit), for example, a baseband processor. When the first access network device 140 is a chip system, the transceiver module 1401 may be an input/output interface of a chip (for example, a baseband chip). The processing module 1402 may be a processor (or a processing circuit) of the chip system, and may include one or more central processing units. It should be understood that the transceiver module 1401 in this embodiment of this application may be implemented by a transceiver or a transceiver-related circuit component, and the processing module 1402 may be implemented by a processor or a processor-related circuit component (which is also referred to as a processing circuit).

For example, the transceiver module 1401 may be configured to perform all sending and receiving operations performed by the first access network device in embodiments shown in FIG. 3 to FIG. 13, and/or configured to support another process of the technology described in this specification. The processing module 1402 may be configured to perform all operations other than the sending and receiving operations performed by the first access network device in embodiments shown in FIG. 3 to FIG. 13, and/or configured to support another process of the technology described in this specification.

The transceiver module 1401 is configured to obtain first energy efficiency. The processing module 1402 is configured to perform an energy saving operation based on the first energy efficiency. The first energy efficiency is determined based on performance and energy consumption that correspond to a first object in a second access network device. In a possible design, the first object includes one or more of the following: a network slice, a service, or an area.

In a possible design, the performance includes one or more of the following: a data volume, a latency, or a quantity of terminal devices.

In a possible design, the first energy efficiency further includes first time that indicates time corresponding to the first energy efficiency and/or second time that indicates time at which the second access network device generates the first energy efficiency.

In a possible design, a type of the first energy efficiency includes energy efficiency statistics information and/or target energy efficiency information.

In a possible design, before obtaining the first energy efficiency, the transceiver module 1401 is further configured to send first request information that is for requesting the first energy efficiency corresponding to the second access network device.

In a possible design, the first request information includes one or more of the following: identifier information of the first object, the type of the first energy efficiency, information about the first time, obtaining time corresponding to the first energy efficiency, periodic indication information corresponding to the first energy efficiency, or expected accuracy corresponding to the first energy efficiency. The type of the first energy efficiency includes the energy efficiency statistics information and/or the target energy efficiency information. The obtaining time corresponding to the first energy efficiency indicates time at which the first access network device expects to obtain the first energy efficiency. The periodic indication information corresponding to the first energy efficiency indicates the second access network device whether to periodically send the first energy efficiency to the first access network device.

In a possible design, the processing module 1402 is further configured to hand over a part or all of terminal devices corresponding to the first object to the second access network device.

In a possible design, the transceiver module 1401 is further configured to obtain communication information of a terminal device, and the processing module 1402 is further configured to perform the energy saving operation based on the communication information and the first energy efficiency. The communication information indicates a communication feature of communication that is performed by the terminal device and that corresponds to the first object.

In a possible design, the communication information includes one or more of the following: a communication time period, a data volume, a periodic communication indication, or a burst communication indication. The communication time period indicates a time period in which the communication corresponding to the communication information occurs. The data volume indicates an uplink data volume and/or a downlink data volume during the communication performed by the terminal device. The periodic communication indication indicates whether the communication corresponding to the communication information is periodic. The burst communication indication indicates whether the communication corresponding to the communication information is bursty. If the communication is bursty, the burst communication indication further indicates at least one of time of the burst communication, an uplink data volume of the burst communication, or a downlink data volume of the burst communication.

In a possible design, the communication information further includes third time that indicates time corresponding to the communication information and/or fourth time that indicates time at which the terminal device generates the communication information.

In a possible design, a type of the communication information includes communication statistics information and/or target communication information.

In a possible design, before obtaining the communication information of the terminal device, the transceiver module 1401 is further configured to send second request information that is for requesting the communication information corresponding to the terminal device.

In a possible design, the second request information includes one or more of the following: the identifier information of the first object, the type of the communication information, information about the third time, obtaining time corresponding to the communication information, periodic indication information corresponding to the communication information, or expected accuracy corresponding to the communication information. The type of the communication information includes the communication statistics information and/or the target communication information. The obtaining time corresponding to the communication information indicates time at which the first access network device expects to obtain the communication information. The periodic indication information corresponding to the communication information indicates the terminal device whether to periodically send the communication information to the first access network device.

In a possible design, after the processing module 1402 hands over the terminal device to the second access network device, the transceiver module 1401 is further configured to receive a communication measurement result of the terminal device from the second access network device. The communication measurement result indicates a communication feature that corresponds to the terminal device after the terminal device accesses the second access network device.

In a possible design, before receiving the communication measurement result of the terminal device from the second access network device, the transceiver module 1401 is further configured to send, to the second access network device, third request information that is for requesting the communication measurement result of the terminal device.

In a possible design, the transceiver module 1401 is further configured to obtain movement track information of a terminal device, and the processing module 1402 is further configured to perform the energy saving operation based on the movement track information and the first energy efficiency.

In a possible design, the movement track information further includes fifth time that indicates time corresponding to the movement track information and/or sixth time that indicates time at which the terminal device generates the movement track information.

In a possible design, a type of the movement track information includes movement track statistics information and/or target movement track information.

In a possible design, before obtaining the movement track information of the terminal device, the transceiver module 1401 is further configured to send fourth request information that is for requesting the movement track information corresponding to the terminal device.

In a possible design, the fourth request information includes one or more of the following: the location, the direction, the speed, the acceleration, the type of the movement track information, information about the fifth time, obtaining time corresponding to the movement track information, periodic indication information corresponding to the movement track information, or expected accuracy corresponding to the movement track information. The type of the movement track information includes the movement track statistics information and/or the target movement track information. The obtaining time corresponding to the movement track information indicates time at which the first access network device expects to obtain the movement track information. The periodic indication information corresponding to the movement track information indicates the terminal device whether to periodically send the movement track information to the first access network device.

In another possible implementation, the transceiver module 1401 in FIG. 14 may be replaced with a transceiver, and a function of the transceiver module 1401 may be integrated into the transceiver. The processing module 1402 may be replaced with a processor, and a function of the processing module 1402 may be integrated into the processor. Further, the first access network device 140 shown in FIG. 14 may further include a memory. When the transceiver module 1401 is replaced with a transceiver, and the processing module 1402 is replaced with a processor, the first access network device 140 in this embodiment of this application may be the communication apparatus shown in FIG. 2.

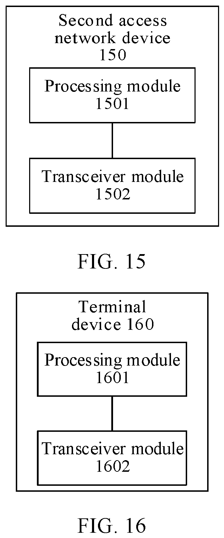

When each functional module is obtained through division based on each corresponding function, FIG. 15 shows a second access network device. The second access network device 150 may include a processing module 1501 and a transceiver module 1502. For example, the second access network device 150 may be a second access network device, or may be a chip used in the second access network device or another combined device or component that has a function of the second access network device. When the second access network device 150 is the second access network device, the transceiver module 1502 may be a transceiver, the transceiver may include an antenna, a radio frequency circuit, and the like, and the processing module 1501 may be a processor (or a processing circuit), for example, a baseband processor. The baseband processor may include one or more CPUs. When the second access network device 150 is a component having the function of the second access network device, the transceiver module 1502 may be a radio frequency unit, and the processing module 1501 may be a processor (or a processing circuit), for example, a baseband processor. When the second access network device 150 is a chip system, the transceiver module 1502 may be an input/output interface of a chip (for example, a baseband chip). The processing module 1501 may be a processor (or a processing circuit) of the chip system, and may include one or more central processing units. It should be understood that the transceiver module 1502 in this embodiment of this application may be implemented by a transceiver or a transceiver-related circuit component, and the processing module 1501 may be implemented by a processor or a processor-related circuit component (which is also referred to as a processing circuit).

For example, the processing module 1501 may be configured to perform all operations other than sending and receiving operations performed by the second access network device in embodiments shown in FIG. 3 to FIG. 13, and/or configured to support another process of the technology described in this specification. For example, the transceiver module 1502 may be configured to perform all the sending and receiving operations performed by the second access network device in embodiments shown in FIG. 3 to FIG. 13, and/or configured to support another process of the technology described in this specification.

The processing module 1501 is configured to determine first energy efficiency. The transceiver module 1502 is configured to send the first energy efficiency to a first access network device. The first energy efficiency is determined based on performance and energy consumption that correspond to a first object in the second access network device. In a possible design, before sending the first energy efficiency to the first access network device, the transceiver module 1502 is further configured to receive, from the first access network device, first request information that is for requesting the first energy efficiency corresponding to the second access network device.

In a possible design, the transceiver module 1502 is further configured to send, to the first access network device, a communication measurement result sent by a terminal device, where the communication measurement result indicates a communication feature that corresponds to the terminal device after the terminal device accesses the second access network device.

In a possible design, before receiving the communication measurement result from the terminal device, the transceiver module 1502 is further configured to receive, from the first access network device, third request information that is for requesting the communication measurement result of the terminal device; and send the third request information to the terminal device.

In another possible implementation, the processing module 1501 in FIG. 15 may be replaced with a processor, and a function of the processing module 1501 may be integrated into the processor. The transceiver module 1502 may be replaced with a transceiver, and a function of the transceiver module 1502 may be integrated into the transceiver. Further, the second access network device 150 shown in FIG. 15 may further include a memory. When the processing module 1501 is replaced with a processor, and the transceiver module 1502 is replaced with a transceiver, the second access network device 150 in this embodiment of this application may be the communication apparatus shown in FIG. 2.

When each functional module is obtained through division based on each corresponding function, FIG. 16 shows a terminal device. The terminal device 160 may include a processing module 1601 and a transceiver module 1602. For example, the terminal device 160 may be a terminal device, or may be a chip used in the terminal device or another combined device or component that has a function of the terminal device. When the terminal device 160 is the terminal device, the transceiver module 1602 may be a transceiver, the transceiver may include an antenna, a radio frequency circuit, and the like, and the processing module 1601 may be a processor (or a processing circuit), for example, a baseband processor. The baseband processor may include one or more CPUs. When the terminal device 160 is a component having the function of the terminal device, the transceiver module 1602 may be a radio frequency unit, and the processing module 1601 may be a processor (or a processing circuit), for example, a baseband processor. When the terminal device 160 is a chip system, the transceiver module 1602 may be an input/output interface of a chip (for example, a baseband chip). The processing module 1601 may be a processor (or a processing circuit) of the chip system, and may include one or more central processing units. It should be understood that the transceiver module 1602 in this embodiment of this application may be implemented by a transceiver or a transceiver-related circuit component, and the processing module 1601 may be implemented by a processor or a processor-related circuit component (which is also referred to as a processing circuit).

For example, the processing module 1601 may be configured to perform all operations other than sending and receiving operations performed by the terminal device in embodiments shown in FIG. 3 to FIG. 13, and/or configured to support another process of the technology described in this specification. For example, the transceiver module 1602 may be configured to perform all the sending and receiving operations performed by the terminal device in embodiments shown in FIG. 3 to FIG. 13, and/or configured to support another process of the technology described in this specification.

The processing module 1601 is configured to determine communication information that indicates a communication feature of communication that is performed by the terminal device and that corresponds to a first object. The transceiver module 1602 is configured to send the communication information to a first access network device. The communication information is used by the first access network device to perform an energy saving operation based on the communication information and first energy efficiency, and the first energy efficiency is determined based on performance and energy consumption that correspond to the first object in a second access network device.

In a possible design, before sending the communication information to the first access network device, the transceiver module 1602 is further configured to receive, from the first access network device, second request information that is for requesting the communication information corresponding to the terminal device.

In a possible design, after the terminal device is handed over to the second access network device, the transceiver module 1602 is further configured to send, to the second access network device, a communication measurement result that indicates a communication feature that corresponds to the terminal device after the terminal device accesses the second access network device.

In a possible design, before sending the communication measurement result to the second access network device, the transceiver module 1602 is further configured to receive, from the second access network device, third request information that is for requesting the communication measurement result of the terminal device.

The processing module 1601 is alternatively configured to determine movement track information. The transceiver module 1602 is alternatively configured to send the movement track information to a first access network device. The movement track information is used by the first access network device to perform an energy saving operation based on the movement track information and first energy efficiency, and the first energy efficiency is determined based on performance and energy consumption that correspond to a first object in a second access network device.

In a possible design, before sending the movement track information to the first access network device, the transceiver module 1602 is further configured to receive, from the first access network device, fourth request information that is for requesting the movement track information corresponding to the terminal device.

In another possible implementation, the processing module 1601 in FIG. 16 may be replaced with a processor, and a function of the processing module 1601 may be integrated into the processor. The transceiver module 1602 may be replaced with a transceiver, and a function of the transceiver module 1602 may be integrated into the transceiver. Further, the terminal device 160 shown in FIG. 16 may further include a memory. When the processing module 1601 is replaced with a processor, and the transceiver module 1602 is replaced with a transceiver, the terminal device 160 in this embodiment of this application may be the communication apparatus shown in FIG. 2.

An embodiment of this application further provides a computer-readable storage medium. All or some of the processes in the foregoing method embodiments may be implemented by a computer program instructing related hardware. The program may be stored in the computer-readable storage medium. When the program is executed, the processes of the foregoing method embodiments may be included. The computer-readable storage medium may be an internal storage unit of the terminal (including a data transmitting end and/or a data receiving end) in any one of the foregoing embodiments, for example, a hard disk drive or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that are configured on the terminal. Further, the computer-readable storage medium may alternatively include both of the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
obtaining, by a first access network device, first energy efficiency, wherein the first energy efficiency is determined based on performance and energy consumption that correspond to a first object in a second access network device; and
performing, by the first access network device, an energy saving operation based on the first energy efficiency.

2. The method according to claim 1, wherein
the first object comprises one or more of the following: a network slice, a service, or an area.

3. The method according to claim 1 or 2, wherein
the performance comprises one or more of the following: a data volume, a latency, or a quantity of terminal devices.

4. The method according to any one of claims 1 to 3, wherein
the first energy efficiency further comprises first time and/or second time, wherein the first time indicates time corresponding to the first energy efficiency, and the second time indicates time at which the second access network device generates the first energy efficiency.

5. The method according to any one of claims 1 to 4, wherein
a type of the first energy efficiency comprises energy efficiency statistics information and/or target energy efficiency information.

6. The method according to any one of claims 1 to 5, wherein before the obtaining, by a first access network device, first energy efficiency, the method further comprises:
sending, by the first access network device, first request information, wherein the first request information is for requesting the first energy efficiency corresponding to the second access network device.

7. The method according to claim 6, wherein
the first request information comprises one or more of the following: identifier information of the first object, the type of the first energy efficiency, information about the first time, obtaining time corresponding to the first energy efficiency, periodic indication information corresponding to the first energy efficiency, or expected accuracy corresponding to the first energy efficiency, wherein
the type of the first energy efficiency comprises the energy efficiency statistics information and/or the target energy efficiency information, the obtaining time corresponding to the first energy efficiency indicates time at which the first access network device expects to obtain the first energy efficiency, and the periodic indication information corresponding to the first energy efficiency indicates the second access network device whether to periodically send the first energy efficiency to the first access network device.

8. The method according to any one of claims 1 to 7, wherein the performing, by the first access network device, an energy saving operation based on the first energy efficiency comprises:
handing over, by the first access network device, a part or all of terminal devices corresponding to the first object to the second access network device.

9. The method according to any one of claims 1 to 8, wherein the method further comprises:
obtaining, by the first access network device, communication information of a terminal device, wherein the communication information indicates a communication feature of communication that is performed by the terminal device and that corresponds to the first object; and
performing, by the first access network device, the energy saving operation based on the communication information and the first energy efficiency.

10. The method according to claim 9, wherein
the communication information comprises one or more of the following: a communication time period, a data volume, a periodic communication indication, or a burst communication indication, wherein
the communication time period indicates a time period in which the communication corresponding to the communication information occurs, the data volume indicates an uplink data volume and/or a downlink data volume during the communication performed by the terminal device, the periodic communication indication indicates whether the communication corresponding to the communication information is periodic, and the burst communication indication indicates whether the communication corresponding to the communication information is bursty, wherein if the communication is bursty, the burst communication indication further indicates at least one of time of the burst communication, an uplink data volume of the burst communication, or a downlink data volume of the burst communication.

11. The method according to claim 9 or 10, wherein
the communication information further comprises third time and/or fourth time, wherein the third time indicates time corresponding to the communication information, and the fourth time indicates time at which the terminal device generates the communication information.

12. The method according to any one of claims 9 to 11, wherein
a type of the communication information comprises communication statistics information and/or target communication information.

13. The method according to any one of claims 9 to 12, wherein before the obtaining, by the first access network device, communication information of a terminal device, the method further comprises:
sending, by the first access network device, second request information, wherein the second request information is for requesting the communication information corresponding to the terminal device.

14. The method according to claim 13, wherein
the second request information comprises one or more of the following: the identifier information of the first object, the type of the communication information, information about the third time, obtaining time corresponding to the communication information, periodic indication information corresponding to the communication information, or expected accuracy corresponding to the communication information, wherein
the type of the communication information comprises the communication statistics information and/or the target communication information, the obtaining time corresponding to the communication information indicates time at which the first access network device expects to obtain the communication information, and the periodic indication information corresponding to the communication information indicates the terminal device whether to periodically send the communication information to the first access network device.

15. The method according to any one of claims 9 to 14, wherein after the first access network device hands the terminal device over to the second access network device, the method further comprises:
receiving, by the first access network device, a communication measurement result of the terminal device from the second access network device, wherein the communication measurement result indicates a communication feature that corresponds to the terminal device after the terminal device accesses the second access network device.

16. The method according to claim 15, wherein before the receiving, by the first access network device, a communication measurement result of the terminal device from the second access network device, the method further comprises:
sending, by the first access network device, third request information to the second access network device, wherein the third request information is for requesting the communication measurement result of the terminal device.

17. The method according to any one of claims 1 to 16, wherein the method further comprises:
obtaining, by the first access network device, movement track information of the terminal device; and
performing, by the first access network device, the energy saving operation based on the movement track information and the first energy efficiency.

18. The method according to claim 17, wherein
the movement track information comprises one or more of the following: a location, a direction, a speed, or an acceleration.

19. The method according to claim 17 or 18, wherein
the movement track information further comprises fifth time and/or sixth time, wherein the fifth time indicates time corresponding to the movement track information, and the sixth time indicates time at which the terminal device generates the movement track information.

20. The method according to any one of claims 17 to 19, wherein
a type of the movement track information comprises movement track statistics information and/or target movement track information.

21. The method according to any one of claims 17 to 20, wherein before the obtaining, by the first access network device, movement track information of the terminal device, the method further comprises:
sending, by the first access network device, fourth request information, wherein the fourth request information is for requesting the movement track information corresponding to the terminal device.

22. The method according to claim 21, wherein
the fourth request information comprises one or more of the following: the location, the direction, the speed, the acceleration, the type of the movement track information, information about the fifth time, obtaining time corresponding to the movement track information, periodic indication information corresponding to the movement track information, or expected accuracy corresponding to the movement track information, wherein
the type of the movement track information comprises the movement track statistics information and/or the target movement track information, the obtaining time corresponding to the movement track information indicates time at which the first access network device expects to obtain the movement track information, and the periodic indication information corresponding to the movement track information indicates the terminal device whether to periodically send the movement track information to the first access network device.

23. A communication method, comprising:
determining, by a second access network device, first energy efficiency, wherein the first energy efficiency is determined based on performance and energy consumption that correspond to a first object in the second access network device; and
sending, by the second access network device, the first energy efficiency to a first access network device.

24. The method according to claim 23, wherein before the sending, by the second access network device, the first energy efficiency to a first access network device, the method further comprises:
receiving, by the second access network device, first request information from the first access network device, wherein the first request information is for requesting the first energy efficiency corresponding to the second access network device.

25. The method according to claim 23 or 24, wherein the method further comprises:
receiving, by the second access network device, a communication measurement result from a terminal device, wherein the communication measurement result indicates a communication feature that corresponds to the terminal device after the terminal device accesses the second access network device; and
sending, by the second access network device, the communication measurement result to the first access network device.

26. The method according to claim 25, wherein before the receiving, by the second access network device, a communication measurement result from a terminal device, the method further comprises:
receiving, by the second access network device, third request information from the first access network device, wherein the third request information is for requesting the communication measurement result of the terminal device; and
sending, by the second access network device, the third request information to the terminal device.

27. A communication method, comprising:
determining, by a terminal device, communication information, wherein the communication information indicates a communication feature of communication that is performed by the terminal device and that corresponds to a first object, the communication information is used by a first access network device to perform an energy saving operation based on the communication information and first energy efficiency, and the first energy efficiency is determined based on performance and energy consumption that correspond to the first object in a second access network device; and
sending, by the terminal device, the communication information to the first access network device.

28. The method according to claim 27, wherein before the sending, by the terminal device, the communication information to the first access network device, the method further comprises:
receiving, by the terminal device, second request information from the first access network device, wherein the second request information is for requesting the communication information corresponding to the terminal device.

29. The method according to claim 27 or 28, wherein after the terminal device is handed over to the second access network device, the method further comprises:
sending, by the terminal device, a communication measurement result to the second access network device, wherein the communication measurement result indicates a communication feature that corresponds to the terminal device after the terminal device accesses the second access network device.

30. The method according to claim 29, wherein before the sending, by the terminal device, a communication measurement result to the second access network device, the method further comprises:
receiving, by the terminal device, third request information from the second access network device, wherein the third request information is for requesting the communication measurement result of the terminal device.

31. A communication method, comprising:
determining, by a terminal device, movement track information, wherein the movement track information is used by a first access network device to perform an energy saving operation based on the movement track information and first energy efficiency, and the first energy efficiency is determined based on performance and energy consumption that correspond to a first object in a second access network device; and
sending, by the terminal device, the movement track information to the first access network device.

32. The method according to claim 31, wherein before the sending, by the terminal device, the movement track information to the first access network device, the method further comprises:
receiving, by the terminal device, fourth request information from the first access network device, wherein the fourth request information is for requesting the movement track information corresponding to the terminal device.

33. A communication apparatus, comprising a processor, wherein the processor is configured to run a computer program or instructions, to enable the communication apparatus to perform the communication method according to any one of claims 1 to 22, perform the communication method according to any one of claims 23 to 26, perform the communication method according to any one of claims 27 to 30, or perform the communication method according to either of claims 31 and 32.

34. A communication apparatus, comprising a processor and a communication interface, wherein the communication interface is coupled to the processor, the processor is configured to run a computer program or instructions, to implement the communication method according to any one of claims 1 to 22, implement the communication method according to any one of claims 23 to 26, implement the communication method according to any one of claims 27 to 30, or implement the communication method according to either of claims 31 and 32, and the communication interface is configured to communicate with another module other than the communication apparatus.

35. A communication apparatus, comprising an interface circuit and a logic circuit, wherein the interface circuit is configured to obtain input information and/or output information, and the logic circuit is configured to perform the communication method according to any one of claims 1 to 22, perform the communication method according to any one of claims 23 to 26, perform the communication method according to any one of claims 27 to 30, or perform the communication method according to either of claims 31 and 32, and perform processing based on the input information and/or generate the output information.

36. A computer-readable storage medium, wherein the computer-readable storage medium stores computer instructions or a program, and when the computer instructions or the program is run on a computer, the computer is enabled to perform the communication method according to any one of claims 1 to 22, perform the communication method according to any one of claims 23 to 26, perform the communication method according to any one of claims 27 to 30, or perform the communication method according to either of claims 31 and 32.

37. A computer program product, comprising computer instructions, wherein when a part or all of the computer instructions are run on a computer, the computer is enabled to perform the communication method according to any one of claims 1 to 22, perform the communication method according to any one of claims 23 to 26, perform the communication method according to any one of claims 27 to 30, or perform the communication method according to either of claims 31 and 32.

38. A communication system, comprising a first access network device and a second access network device, wherein
the first access network device is configured to obtain first energy efficiency, and perform an energy saving operation based on the first energy efficiency, wherein the first energy efficiency is determined based on performance and energy consumption that correspond to a first object in the second access network device; and
the second access network device is configured to determine the first energy efficiency, and send the first energy efficiency to the first access network device.

39. The communication system according to claim 38, wherein the communication system further comprises a terminal device, wherein
the terminal device is configured to send communication information to the first access network device, wherein the communication information indicates a communication feature of communication that is performed by the terminal device and that corresponds to the first object; and
the first access network device is further configured to perform the energy saving operation based on the communication information and the first energy efficiency.

40. The communication system according to claim 38 or 39, wherein after the terminal device is handed over to the second access network device,
the terminal device is further configured to send a communication measurement result to the second access network device, wherein the communication measurement result indicates a communication feature that corresponds to the terminal device after the terminal device accesses the second access network device.

41. The communication system according to claim 38, wherein the communication system further comprises a terminal device, wherein
the terminal device is configured to send movement track information to the first access network device; and
the first access network device is further configured to perform the energy saving operation based on the movement track information and the first energy efficiency.
